# EUROPEAN PATENT SPECIFICATION

(11) **EP 2 433 904 B1**
(45) Date of publication and mention of the grant of the patent: **20.11.2019**
(21) Application number: 10777555.3
(22) Date of filing: 18.05.2010
(51) Int. Cl.: C01B 3/38, H01M 8/06, H01M 8/10, H01M 8/0612

(54) **METHOD FOR OPERATING A HYDROGEN GENERATION DEVICE AND FUEL CELL SYSTEM**
VERFAHREN ZUM BETRIEB EINER WASSERSTOFFERZEUGUNGSVORRICHTUNG UND EINES BRENNSTOFFZELLENSYSTEMS
PROCÉDÉ DE FONCTIONNEMENT D'UN DISPOSITIF DE PRODUCTION D'HYDROGÈNE ET SYSTÈME DE PILES À COMBUSTIBLE

(30) Priority: 20.05.2009 JP 2009121654
(43) Date of publication of application: 28.03.2012
(73) Proprietor: Panasonic Corporation, Kadoma-shi Osaka 571-8501 (JP)
(72) Inventor: NAKAMURA, Akinari, Chuo-ku, Osaka-shi Osaka 540-6207 (JP); URATA, Takayuki, Chuo-ku, Osaka-shi Osaka 540-6207 (JP); OHARA, Hideo, Chuo-ku, Osaka-shi Osaka 540-6207 (JP)
(74) Representative: Grünecker Patent- und Rechtsanwälte PartG mbB
(86) International application number: PCT/JP2010/003321
(87) International publication number: WO 2010/134317

(56) References cited:
- WO-A1-2007/145321
- WO-A1-2009/087973
- WO-A1-2009/087973
- JP-A- 2003 203 664
- JP-A- 2003 282 114
- JP-A- 2003 306 309
- JP-A- 2007 254 251
- US-A- 3 522 019

## Description

### Technical Field

The present invention relates to a method for operating a hydrogen generator for generating a hydrogen-containing gas using a raw material and steam, and a method for operating a fuel cell system using the hydrogen generator.

### Background Art

As a fuel cell power generation system using a conventional hydrogen generator, there is known a fuel cell power generation apparatus which exhausts a generated reformed gas via a valve to suppress a rapid pressure rise when the pressure rises, during an operation of a reformer, (e.g., see patent literature 1). Fig. 5 is a schematic view showing a fuel cell power generation apparatus disclosed in patent literature 1.

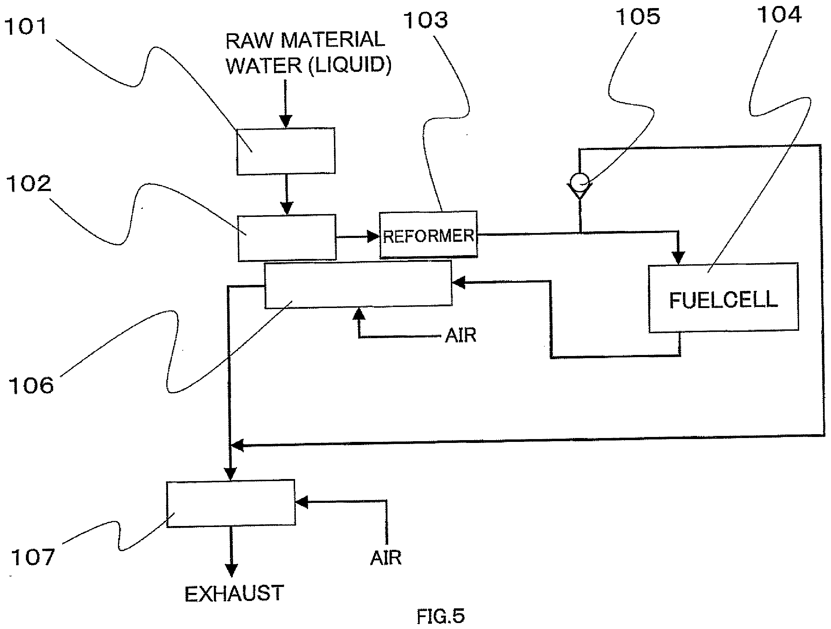

As shown in Fig. 5, the conventional fuel cell power generation apparatus includes a pump 101 which transports a raw material and water, an evaporator 102 which evaporates the transported raw material and water, a reformer 103 which generates a hydrogen-rich fuel gas from the raw material and the steam through a steam reforming reaction, a fuel cell 104 which performs power generation through an electrochemical reaction using the generated fuel gas and oxygen in air, a relief valve 105 which releases the fuel gas when a pressure of the fuel gas flowing from the reformer 103 to the fuel cell 1 04 reaches a predetermined value (e.g., 10kPa) or more, and a catalytic combustor 106 and a catalytic combustor 107 which combust the fuel gas exhausted from the fuel cell 104.

The raw material supplied from a material supply source and water supplied from a water supply source are transported to the evaporator 102 by the pump 101. The evaporator 102 evaporates the water into the steam and supplies an air-fuel mixture of the raw material and the steam to the reformer 103. The reformer 103 generates a hydrogen-rich fuel gas from the raw material and the steam, and a carbon monoxide removing device which is not shown removes carbon monoxide by oxidization. The fuel gas is exhausted from the reformer 103 and supplied to an anode of the fuel cell 1 04 and an electric power is taken out in the fuel cell 104 through an electrochemical reaction. The fuel gas remaining unconsumed in the anode of the fuel cell 1 04 is combusted in the catalytic combustor 106 and the catalytic combustor 107 and exhausted to outside the fuel cell power generation apparatus.

When the pressure of the fuel gas sent from the reformer 103 to the fuel cell 104 reaches a predetermined value or more, the relief valve 105 opens, thereby sending the fuel gas to the catalytic combustor 107, which combusts hydrogen in the fuel gas. In this way, the fuel cell power generation apparatus disclosed in patent literature 1 is configured to suppress a rapid pressure rise during the operation of the reformer 103. US 3 522 019 A relates to an apparatus for generating hydrogen from liquid hydrogen-containing feedstocks.

### Citation Lists

### Patent Literatures

Patent document 1: Japanese Laid-Open Patent Application Publication No. 2007-265651 Publication (page 3-6, Fig. 1)

### Summary of the Invention

### Technical Problem

However, in the conventional fuel cell power generation apparatus shown in Fig. 5, the gas exhausted from the relief valve 105 is the hydrogen-rich fuel gas with a high-temperature. In a case where a temperature of the reformer 103 is not sufficiently increased, for example, at start-up, the fuel gas contains carbon monoxide with a high concentration. If there is a problem in the catalytic combustor 107 in a case where the high-temperature fuel gas or the fuel gas containing high-concentration carbon monoxide is released from the relief valve, the exhausted gas cannot be combusted in the catalytic combustor 107. Even in a case where there is no problem in the catalytic combustor 107, a part of the exhausted gas is not combusted in the catalytic combustor 107 and exhausted therethrough because of the speed of the exhausted gas is high, if an excess pressure rise arises. Therefore, the high-temperature fuel is exhausted. Also, since the catalytic combustor 107 does not combust carbon monoxide, the fuel cell power generation apparatus disclosed in patent literature 1 has a problem that the fuel gas containing the high-concentration carbon monoxide is exhausted.

Accordingly, the present invention has been made to solve the above problem associated with the prior art, and an object of the present invention is to provide a method for operating a hydrogen generator which is capable of achieving suppressing emission of carbon monoxide and reduction of a temperature in a gas exhausted by the operation of the relief valve and a method for operating a fuel cell system using the hydrogen generator.

### Solution to Problem

To solve the above described problem associated with the prior arts, a method for operating a hydrogen generator of the present invention is defined in claim 1. In accordance with such a configuration, it is possible to preferentially exhaust the material gas and steam which are present upstream of the reforming catalyst of the reformer, using the pressure releasing device. In addition, it is possible to reduce a temperature of the exhausted gas, using the cooler.

A method for operating a fuel cell system of the present invention is defined in claim 7. In accordance with such a configuration, even when a pressure rises in the fuel cell, it is possible to preferentially exhaust the material gas and steam which are present upstream of the reforming catalyst of the reformer, using the pressure releasing device. In addition, it is possible to reduce a temperature of the exhausted gas, using the cooler. Further advantageous embodiments are defined in the dependent claims.

The above and further objects, features and advantages of the present invention will more fully be apparent from the following detailed description of preferred embodiments with reference to accompanying drawings.

### Advantageous Effects of the Invention

In accordance with the method for operating the hydrogen generator and the method for operating the fuel cell system including the hydrogen generator, according to the present invention, it is possible to preferentially exhaust the material gas and steam which are present upstream of the catalyst of the reformer, using the pressure releasing device, and it is possible to reduce a temperature of the exhausted gas, using the cooler. Therefore, it is possible to prevent carbon monoxide in the exhausted gas from being emitted and reduce a temperature of the exhausted gas.

### Brief Description of the Drawings

[Fig. 1] Fig. 1 is a block diagram showing a configuration of a hydrogen generator according to Example 1, not part of the present invention, but which facilitates understanding of the invention.
[Fig. 2] Fig. 2 is a block diagram showing a configuration of a hydrogen generator according to Example 2, not part of the present invention, but which facilitates understanding of the invention.
[Fig. 3] Fig. 3 is a block diagram showing a schematic configuration of a hydrogen generator according to Example 3, not part of the present invention, but which facilitates understanding of the invention.
[Fig. 4] Fig. 4 is a block diagram showing a configuration of a fuel cell system according to Example 4, not part of the present invention, but which facilitates understanding of the invention.
[Fig. 5] Fig. 5 is a schematic view showing a fuel cell power generation apparatus disclosed in patent literature 1.
[Fig. 6] Fig. 6 is a block diagram showing a schematic configuration of a hydrogen generator according to Example 5, not part of the present invention, but which facilitates understanding of the invention.
[Fig. 7] Fig. 7 is a block diagram showing a schematic configuration of a hydrogen generator of modification example 1 of the hydrogen generator according to Example 5.
[Fig. 8] Fig. 8 is a block diagram showing a schematic configuration of a hydrogen generator of modification example 2 of the hydrogen generator according to Example 5.
[Fig. 9] Fig. 9 is a block diagram showing a schematic configuration of a hydrogen generator according to Example 6, not part of the present invention, but which facilitates understanding of the invention.
[Fig. 10] Fig. 10 is a block diagram showing a schematic configuration of a fuel cell system according to Example 7, not part of the present invention, but which facilitates understanding of the invention.
[Fig. 11] Fig. 11 is a block diagram showing a schematic configuration of a fuel cell system according to Example 8, not part of the present invention, but which facilitates understanding of the invention.
[Fig. 12] Fig. 12 is a block diagram showing a schematic configuration of a fuel cell system according to Example 9, not part of the present invention, but which facilitates understanding of the invention.

### Description of Embodiments

To solve the above described problem associated with the prior arts, a method for operating a hydrogen generator as defined in claim 1 is provided as a first embodiment.

In accordance with such a configuration, it is possible to preferentially exhaust the material gas and steam which are present upstream of the catalyst of the reformer, using the pressure releasing device. In addition, it is possible to reduce a temperature of the exhausted gas, using the cooler.

Also, in accordance with this configuration, the pressure releasing device is forcibly opened by the on-off device in a stopped state of the operation of the hydrogen generator.

A second embodiment is defined in claim 2. In accordance with this configuration, the first cooler serves to cool the combustion exhaust gas during a normal operation and cool the exhausted gas during an operation of the pressure releasing device.

A third embodiment is defined in claim 3.

A fourth embodiment is defined in claim 4.

A fifth embodiment is defined in claim 5.

In accordance with this configuration, it is possible to dilute the gas exhausted from the pressure releasing device using the air supplied from the air supplier and exhaust the diluted gas.

A sixth embodiment is defined in claim 6.

A seventh embodiment is a method for operating a fuel cell system according to claim 7. In accordance with such a configuration, even when a pressure rises in the fuel cell, it is possible to preferentially exhaust the material gas and steam which are present upstream of the catalyst of reformer, using the pressure releasing device. In addition, it is possible to reduce a temperature of the exhausted gas, using the cooler.

An eighth embodiment is defined in claim 8. In accordance with this configuration, the second cooler serves to cool the remaining fuel gas during a normal operation and cool an exhausted gas during an operation of the pressure releasing device.

A ninth embodiment is defined in claim 9.

A tenth embodiment is defined in claim 10.

An eleventh embodiment is defined in claim 11.

In accordance with this configuration, it is possible to dilute the gas exhausted from the pressure releasing device using the air supplied from the air supplier and exhaust the diluted gas.

A twelfth embodiment is defined in claim 12.

A thirteenth embodiment is defined in claim 13.

A fourteenth embodiment is defined in claim 14.

A fifteenth embodiment is defined in claim 15.

Hereinafter, examples of the present invention will be described with reference to the drawings. Throughout the drawings, constituents required to explain the present invention are extracted and depicted, and other constituents are omitted. Furthermore, the present invention is not limited to the embodiments described below.

### (Example 1)

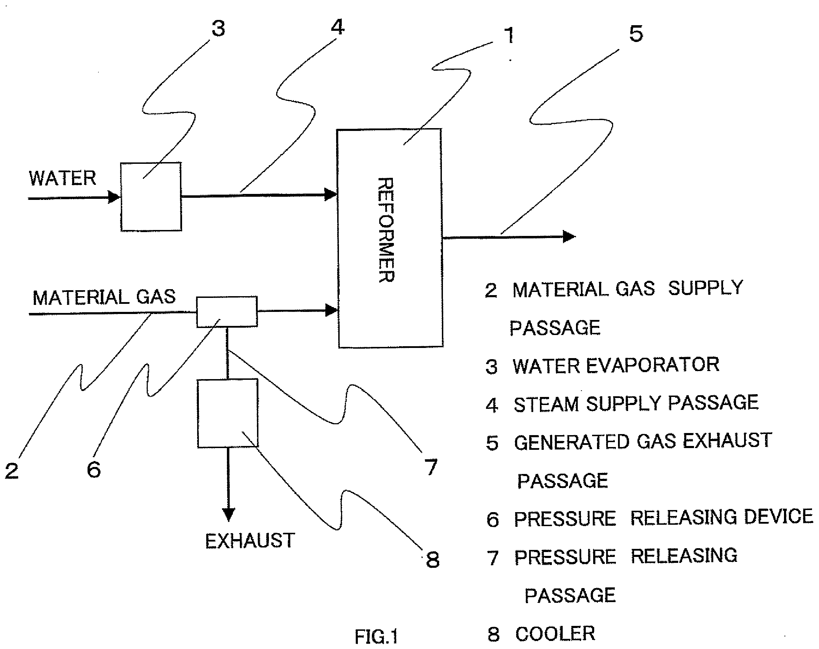

Fig. 1 is a block diagram showing a configuration of a hydrogen generator according to Example

A hydrogen generator according to an example includes a reformer 1 which performs steam reforming of a hydrocarbon based material gas such as a city gas (methane gas) or a propane gas using a reforming catalyst which is not shown, a material gas supply passage (raw material supply passage) 2 used to supply a material gas to the reformer 1, a water evaporator 3 for evaporating water to generate steam required for steam reforming, a steam supply passage 4 used to supply the steam generated in the water evaporator 3 to the reformer 1, a generated gas exhaust passage 5 used to exhaust a hydrogen-containing gas generated through the steam reforming in the reformer 1, a pressure releasing device 6 which releases a pressure of the material gas flowing through the material gas supply passage 2 when the pressure reaches a predetermined pressure or more, a pressure releasing exhaust passage 7 used to exhaust the gas exhausted by the release operation of the pressurization device 6, and a cooler 8 for cooling the gas exhausted from the pressure releasing device 6 and flowing through the pressure releasing exhaust passage 7.

The material gas supply passage 2, the steam supply passage 4 and the pressure releasing exhaust passage 7 which are constituents of this Example 1 are examples of the raw material supply passage, the steam supply passage and the exhaust passage of a first invention, respectively.

Firstly, a specific operation of the hydrogen generator of this example will be described.

In the hydrogen generator shown in Fig. 1, an odor component of a city gas or a propane gas supplied from a raw material supply source which is not shown is removed, and then the resulting material gas is supplied to the reformer 1 through the material gas supply passage 2. The water required for the reforming reaction in the reformer 1 is supplied from a water supply source which is not shown to the water evaporator 3 and the steam is supplied to the reformer 1 through the steam supply passage 4. The reformer 1 mixes the material gas and the steam and then performs the steam reforming using the reforming catalyst (not shown) to generate a hydrogen-rich fuel gas. The generated hydrogen-rich fuel gas is exhausted to outside the hydrogen generator through the generated gas exhaust passage 5. It should be noted that the exhausted fuel gas may be supplied to a device such as a fuel cell for performing power generation using hydrogen.

During generation of hydrogen in the hydrogen generator, if a pressure rises in the reformer 1, the generated gas exhaust passage 5 or a device outside the hydrogen generator which is connected to a downstream side of the generated gas exhaust passage 5 and a pressure of the material gas flowing through the material gas supply passage 2 located upstream of them reaches a predetermined pressure (e.g., 50kPa) or more, the pressure releasing device 6 disposed at the material gas supply passage 2 opens to exhaust the gas. The gas exhausted as a result of the open operation (pressure release operation) of the pressure releasing device 6, flows through the pressure releasing exhaust passage 7. The cooler 8 disposed on the pressure releasing passage 7 cools the exhausted gas, and the cooled gas is exhausted to outside the hydrogen generator.

In accordance with the configuration of the hydrogen generator of this example, since the pressure releasing device 6 is disposed at the material gas supply passage 2, the pressure releasing device 6 opens to exhaust the gas to the pressure releasing exhaust passage 7, thereby suppressing a pressure rise, if the pressure of the material gas flowing through the material gas supply passage 2 reaches a predetermined pressure (e.g., 50kPa) or more, because of a temporary passage clogging at downstream side of the material gas supply passage 2, reduction of a hydrogen consumption amount in the device outside the hydrogen generator, closing of a passage due to an incorrect operation of an on-off valve which is not shown, etc.

In this case, when the operation continues under a state where the pressure of the material gas is the predetermined pressure (e.g., 50kPa) or more, the pressure releasing device 6 exhausts the supplied material gas, while when the operation stops, the material gas present in a portion of the material gas supply passage 2 which is downstream of the pressure releasing device 6, a mixture gas of the material gas and steam which is present in upstream side of the reforming catalyst of the reformer 1, and the steam generated by the water evaporator 3 in a later time, are exhausted through the steam supply passage 4. The cooler 8 disposed on the pressure releasing exhaust passage 7 cools the exhausted gas. The cooler 8 cools and condenses the steam into water, which is discharged

In accordance with the configuration of the hydrogen generator according to Example 1, since the exhausted gas is free from carbon monoxide contained in the fuel gas flowing through the generated gas exhaust passage 5, the gas can be exhausted safely. Since the exhausted gas is exhausted to outside the hydrogen generator after being cooled by the cooler 8, reduction of the temperature and volume of the exhausted gas can be achieved. In a case where the exhausted gas contains the steam, an amount of the exhausted gas can be further reduced.

Although in the configuration of the hydrogen generator according to Example 1, the pressure releasing device 6 is disposed on the material gas supply passage 2, the gas can be exhausted safely, and reduction of the temperature and volume of the exhausted gas can be achieved in the same manner by disposing the pressure releasing device 6 on a passage which branches from a location of the material gas supply passage 2.

Although a release pressure of the pressure releasing device 6 according to Example 1 is 50kPa, the pressure is not limited to this, but may be set as desired within an allowable pressure range of the hydrogen generator and the device located at downstream.

### (Example 2)

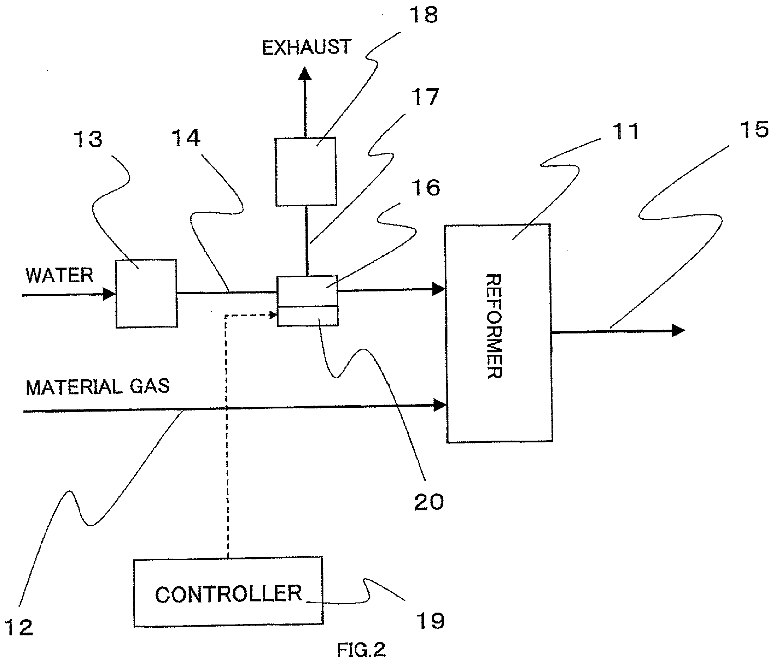

Fig. 2 is a block diagram showing a schematic configuration of a hydrogen generator according to Example 2.

A hydrogen generator according to Example 2 includes a reformer 11 which performs steam reforming of a hydrocarbon based material gas such as the city gas (methane gas) or the propane gas using a reforming catalyst which is not shown, a material gas supply passage (raw material supply passage) 2 used to supply a material gas to the reformer 11, a water evaporator 13 for evaporating water to generate steam required for steam reforming, a steam supply passage (steam supply passage) 14 used to supply the steam generated in the water evaporator 13 to the reformer 11, a generated gas exhaust passage 15 used to exhaust a hydrogen-containing gas generated through the steam reforming in the reformer 11, a pressure releasing device 16 which releases a pressure of the steam flowing through the steam supply passage 14 when the pressure reaches a predetermined pressure or more, a pressure releasing exhaust passage 17 used to exhaust the gas exhausted by the pressure release operation of the pressurization device 16, a cooler 18 for cooling the gas exhausted from the pressure releasing device 16 and flowing through the pressure releasing exhaust passage 17, and a controller 19 configured to control a series of operation of the hydrogen generator. The pressure releasing device 16 incudes an on-off device 20 for forcibly performing the pressure release operation in accordance with a signal from the controller 19. The on-off valve 20 is disposed on a pressure releasing exhaust passage 17 which branches from the steam supply passage 14.

The material gas supply passage 12, the steam supply passage 14, and the pressure releasing exhaust passage 17 which are constituents of this example are examples of the raw material supply passage, the steam supply passage and the exhaust passage of a first invention, respectively. The controller 19 and the on-off device 20 which are constituents of this example are examples of an on-off device of a second invention.

Firstly, a specific operation of the hydrogen generator according to Example 2 will be described.

In the hydrogen generator shown in Fig. 2, an odor component of the city gas or propane gas supplied from the raw material supply source which is not shown is removed, and then the resulting material gas is supplied to the reformer 11 through the material gas supply passage 12. The water required for the reforming reaction in the reformer 11 is supplied from the water supply source which is not shown to the water evaporator 13 and the steam is supplied to the reformer 11 through the steam supply passage 14. The reformer 11 mixes the material gas and the steam and then performs the steam reforming using the reforming catalyst (not shown) to generate a hydrogen-rich fuel gas. The generated hydrogen-rich fuel gas is exhausted to outside the hydrogen generator through the generated gas exhaust passage 15. It should be noted that the exhausted fuel gas may be supplied to the device such as the fuel cell for performing power generation using hydrogen.

During generation of hydrogen in the hydrogen generator, if a pressure rises in the reformer 11, the generated gas exhaust passage 15 or a device outside the hydrogen generator which is connected to a downstream side of the generated gas exhaust passage 15 and a pressure of the steam flowing through the steam supply passage 14 located upstream of them reaches a predetermined pressure (e.g., 50kPa) or more, the pressure releasing device 16 disposed at the pressure releasing exhaust passage 17 which branches from the steam supply passage 14 opens to exhaust the gas. The gas exhausted as a result of the pressure release operation of the pressure releasing device 16, flows through the pressure releasing exhaust passage 17. The cooler 18 disposed on the pressure releasing exhaust passage 17 which is downstream of the pressure releasing device 16 cools the gas, and the cooled gas is exhausted to outside the hydrogen generator.

The above specific operation is controlled by the controller 19. In addition, the controller 19 transmits a signal to the on-off device 20 of the pressure releasing device 16 at a constant frequency in a stopped state of the operation of the hydrogen generator, to forcibly perform the pressure release operation.

In the configuration of the hydrogen generator according to Example 2, since the pressure releasing device 16 is disposed on the pressure releasing exhaust passage 17 which branches from the steam supply passage 14, the pressure releasing device 16 opens to exhaust the gas to the pressure releasing exhaust passage 17, thereby suppressing a pressure rise, if the pressure of the steam flowing through the steam supply passage 14 reaches a predetermined pressure (e.g., 50kPa) or more, because of a temporary passage clogging at downstream side of the steam supply passage 14, reduction of a hydrogen consumption amount in the device outside the hydrogen generator, passage closing due to, an incorrect operation of an on-off valve which is not shown, etc.

In this case, when the operation continues under a state where the pressure of the steam is the predetermined pressure (e.g., 50kPa) or more, the pressure releasing device 16 exhausts the supplied steam, while when the operation stops, the steam present in the steam supply passage 14, the steam generated by the water evaporator 13 in a later time, and a mixture gas of the material gas and steam which is present in upstream side of the reforming catalyst of the reformer 11 are exhausted. The cooler 18 disposed on the pressure releasing passage 17 cools the exhausted gas. In addition, the cooler 18 cools and condenses the steam into water, which is discharged.

In accordance with the configuration of the hydrogen generator according to Example 2, since the exhausted gas is free from carbon monoxide contained in the fuel gas flowing through the generated gas exhaust passage 15, the gas can be exhausted safely. Since the gas is exhausted to outside the hydrogen generator after being cooled by the cooler 18, reduction of the temperature and volume of the exhausted gas can be achieved. Especially in this example, since the steam is discharged, cooled and condensed, with priority, an amount of the exhausted gas can be significantly reduced.

In accordance with the configuration of the hydrogen generator according to Example 2, the pressurization device 16 forcibly performs the pressure release operation using the on-off device 20 at a certain frequency in a stopped state, in accordance with a signal from the controller 19, thereby preventing the pressure releasing device 16 from failing to operate.

Although in the configuration of the hydrogen generator according to Example 2, the pressure releasing device 16 is disposed on the pressure releasing exhaust passage 17 which branches from the steam supply passage 14, the gas can be exhausted safely, and reduction of the temperature and volume of the exhausted gas can be achieved in the same manner by disposing the pressure releasing device 16 on the steam supply passage 14.

Although a release pressure of the pressure releasing device 16 of this example is 50kPa, the pressure is not limited to this, but may be set as desired within an allowable pressure range of the hydrogen generator and the device located at downstream.

### (Example 3)

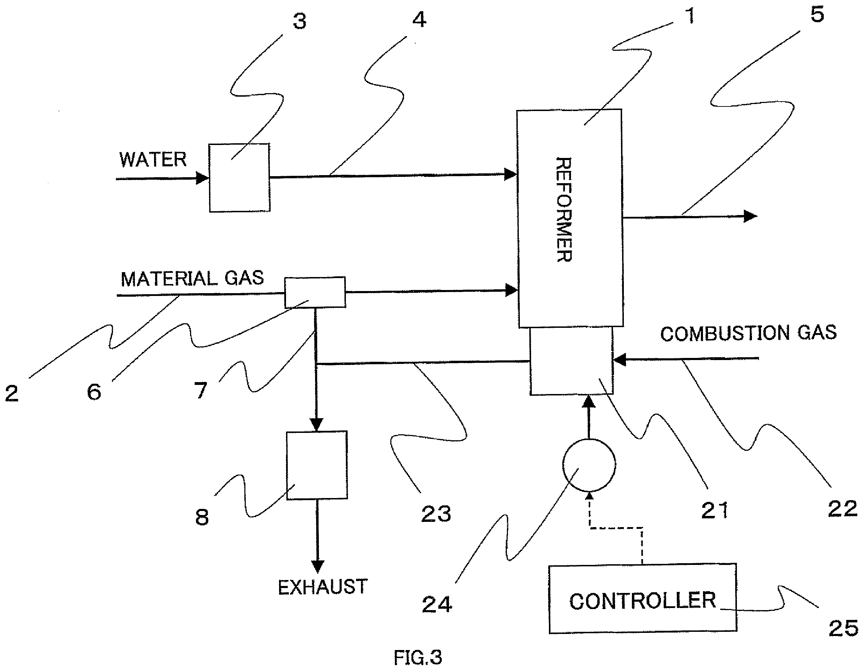

Fig. 3 is a block diagram showing a configuration of a hydrogen generator according to Example 3.

In Fig. 3, the same constituents as those in Fig. 1 are designated by the same reference symbols and will not be described.

A hydrogen generator according to Example 3 includes, in addition to the constituents of the hydrogen generator shown in Fig. 1, a burner 21 for heating the reformer 11, a combustion gas supply passage 22 used to supply the combustion gas to the burner 21, a combustion exhaust gas passage 23 used to exhaust the combustion gas from the burner 21, a combustion fan 24 for supplying combustion air to the burner 21 and a controller 25 configured to control a series of operations of the hydrogen generator.

The cooler 8 and the burner 21 which are the constituents of this example are examples of a first cooler and a combustor of a third invention. The combustion fan 24 which is a constituent of this example is an example of an air supplier of a fourth invention.

Firstly, a specific operation of the hydrogen generator according to Example 3 will be described.

In the hydrogen generator shown in Fig. 3, an odor component of the city gas (methane gas) or propane gas supplied from the raw material supply source which is not shown is removed, and then the resulting material gas is supplied to the reformer 1 through the material gas supply passage 2. The water required for the reforming reaction in the reformer 1 is supplied from the water supply source which is not shown to the water evaporator 3 and the steam is supplied to the reformer 1 through the steam supply passage 4. The reformer mixes the material gas and the steam and then performs the steam reforming using the reforming catalyst (not shown) to generate the hydrogen-rich fuel gas. The generated hydrogen-rich fuel gas is exhausted to outside the hydrogen generator through the generated gas exhaust passage 5. It should be noted that the exhausted fuel gas may be supplied to a device such as a fuel cell for performing power generation using hydrogen.

To enable the reforming reaction to continue, it is necessary to heat the reformer 1. A heating combustion gas is supplied to the burner (combustor) 21 through the combustion gas supply passage 22. Air required for combustion in the burner 21 is supplied from the combustion fan (air supplier) 24 to the burner 21. The reformer 1 is heated by combustion of the combustion gas and air supplied to the burner 21. The combustion exhaust gas is exhausted through the combustion exhaust gas passage 23, is joined to the gas in the pressure releasing exhaust passage 7, then cooled by the cooler 8 and is exhausted to outside the hydrogen generator.

During generation of hydrogen in the hydrogen generator, if a pressure rises in the reformer 1, the generated gas exhaust passage 5 or a device outside the hydrogen generator which is connected to a downstream side of the generated gas exhaust passage 5 and a pressure of the material gas flowing through the material gas supply passage 2 located upstream of them reaches a predetermined pressure (e.g., 50kPa) or more, the pressure releasing device 6 disposed at the material gas supply passage 2 opens to exhaust the gas. The gas exhausted as a result of the pressure release operation of the pressure releasing device 6, flows through the pressure releasing exhaust passage 7. The cooler 8 disposed on the pressure releasing exhaust passage 7 cools the gas, and the gas is exhausted to outside the hydrogen generator. At this time, the controller 25 actuates the combustion fan 24. The air is supplied from the combustion fan 24, supplied from the burner 21 to the pressure releasing exhaust passage 7 through the combustion exhaust gas passage 23, mixed with the gas exhausted from the pressure releasing device 6, and then exhausted to outside the hydrogen generator through the cooler 8.

In accordance with the configuration of the hydrogen generator according to Example 3, in addition to the advantages described in Example 1, the cooler 8 which is a single component, has two functions as follows. The cooler 8 cools the combustion exhaust gas exhausted from the burner 21 during a normal operation of the hydrogen generator, and cools the gas exhausted by the pressure releasing device 6 when the pressure releasing device 6 is exhausting the gas. As a result, reduction of cost is achieved. Furthermore, in accordance with the configuration of the hydrogen generator according to this example, when the pressure releasing device 6 opens to exhaust the gas, the controller 25 actuates the combustion fan 24 to supply the air from the burner 21 to the pressure releasing exhaust passage 7 through the combustion exhaust gas passage 23 so that the air is mixed with the exhausted gas. Thus, the material gas which is a combustible gas can be diluted and exhausted to outside the hydrogen generator. As a result, the gas can be exhausted safely.

### (Example 4)

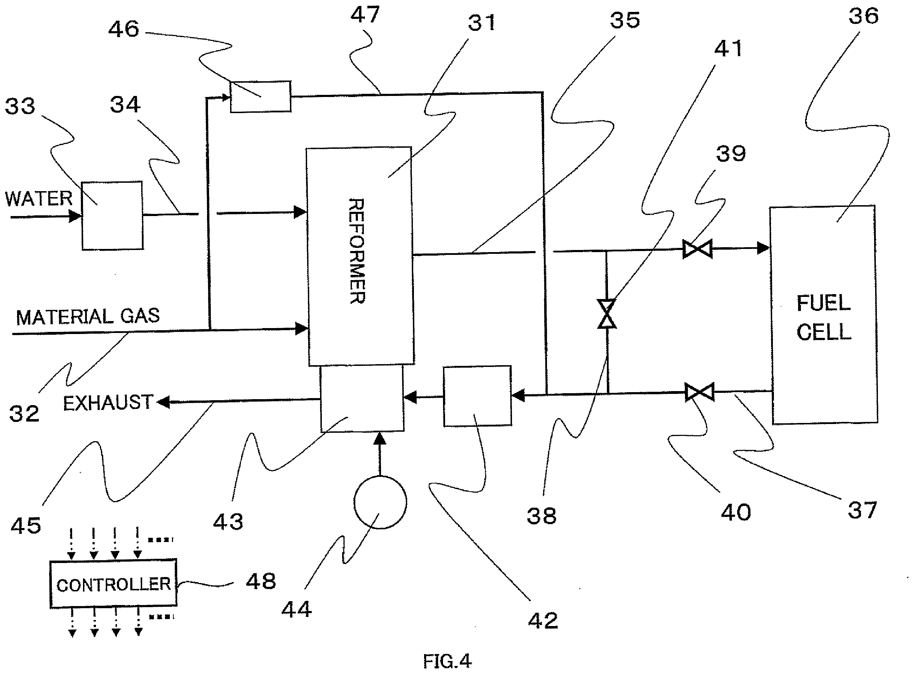

Fig. 4 is a block diagram showing a configuration of a fuel cell system according to Example 4.

A fuel cell system according to Example 4 includes a reformer 31 which performs steam reforming of a hydrocarbon based material gas such as a city gas (methane gas) or a propane gas using a reforming catalyst which is not shown, a material gas supply passage (raw material supply passage) 32 used to supply a material gas to the reformer 31, a water evaporator 33 for evaporating water to generate steam required for steam reforming, a steam supply passage 34 used to supply the steam generated in the water evaporator 33 to the reformer 31, a fuel gas supply passage 35 used to supply to a fuel cell 36, a hydrogen-containing gas generated through the steam reforming in the reformer 31, the fuel cell 36 for performing power generation using the hydrogen-containing gas supplied through the fuel gas supply passage 35, a remaining fuel gas exhaust passage (remaining fuel gas passage) 37 used to exhaust, from the fuel cell 36, the hydrogen-containing gas remaining unconsumed in power generation of the fuel cell 36, a bypass passage 38 for allowing the fuel gas flowing through the fuel gas supply passage 35 to bypass the fuel cell 36 and flow to the remaining fuel gas exhaust passage 37, on-off valves 39, 40 and 41 for closing the passages 35, 37, and 38, respectively, a cooler 42 for cooling the remaining fuel gas exhausted from the fuel cell 36 or the fuel gas which has flowed through the bypass passage 38 to condense the steam contained therein, a burner 43 for combusting the fuel gas or the remaining fuel gas exhausted from the cooler 42, a combustion fan 44 for supplying combustion air to the burner 43, a combustion exhaust gas passage 45 used to exhaust the combustion gas from the burner 43, a pressure releasing device 46 which releases a pressure of the material gas flowing through the material gas supply passage 32 when the pressure reaches a predetermined pressure or more, a pressure releasing exhaust passage 47 used to exhaust the gas exhausted by the release operation of the pressurization device 46, to a portion of the remaining fuel gas exhaust passage 37 which is upstream of the cooler 42 and downstream of the on-off valve 40, and a controller 48 configured to control a series of operation of the fuel cell system.

The remaining fuel gas exhaust passage 37 and the cooler 42 which are constituents of this example are examples of a remaining fuel gas passage and a second cooler of a sixth invention. The combustion fan 24 and the burner 43 which are constituents of this example are examples of an air supplier and a combustor of a seventh invention.

Firstly, a specific operation of the fuel cell system according to Example 4 will be described.

In the fuel cell system shown in Fig. 4, an odor component of the city gas (methane gas) or propane gas supplied from the raw material supply source which is not shown is removed, and then the resulting material gas is supplied to the reformer 31 through the material gas supply passage 32. The water required for the reforming reaction in the reformer 31 is supplied from the water supply source which is not shown to the water evaporator 33 and the steam is supplied to the reformer 31 through the steam supply passage 34. The reformer 31 mixes the material gas and the steam and then performs the steam reforming using the reforming catalyst (not shown) to generate the hydrogen-rich fuel gas.

The generated fuel gas contains carbon monoxide which is harmful to catalyst in the fuel cell 36. The reformer 31 serves to reduce a concentration of carbon monoxide contained in the fuel gas. In an initial stage of start-up, a catalyst temperature of the reformer 31 is not increased sufficiently yet, and therefore, the generated fuel gas contains a high-concentration carbon monoxide. At this time, the fuel gas exhausted from the reformer 31 to the fuel gas supply passage 35 is supplied to the cooler 42 through the bypass passage 38 and the remaining fuel gas exhaust passage 37 by closing the on-off valves 39 and 40 and by opening the on-off valve 41. The cooler 42 cools the fuel gas and condenses the steam. Then, the fuel gas is supplied to the burner 43. The fuel gas is combusted in the burner 43 to heat the reformer 31. When the catalyst temperature of the reformer 31 has been sufficiently increased by heating in the burner 43 and the concentration of carbon monoxide in the fuel gas has been reduced sufficiently, the on-off valves 39 and 40 open and the on-off valve 41 closes, thereby supplying the fuel gas to the fuel cell 36 through the fuel gas supply passage 35. The fuel gas supplied to the fuel cell 36 electrochemically reacts with oxygen in air supplied from a passage which is not shown to the fuel cell 36, which carries out power generation. A DC electric power obtained by power generation is converted into an AC electric power by an inverter which is not shown and the AC electric power is supplied to a power load which is not shown. In contrast, the remaining fuel gas exhausted from the fuel cell 36 contains a combustible gas such as hydrogen which has not been consumed in power generation or a hydrocarbon gas which is not perfectly reformed in the reformer 31. The remaining fuel gas is supplied to the cooler 42 through the remaining fuel gas exhaust passage 37. The cooler 42 cools the fuel gas and condenses the steam. Then, the fuel gas is supplied to the burner 43 and combusted therein to generate heat for maintaining the temperature of the reformer 31.

During generation of hydrogen in the hydrogen generator, if a pressure rises in the reformer 1, the passages 35, 37, and 38, the fuel cell 36, and the on-off valves 39, 40 and 41, and a pressure of the material gas flowing through a portion of the material gas supply passage 32 which is upstream of them, reaches a predetermined pressure (e.g., 50kPa) or more, the pressure releasing device 46 disposed on the pressure releasing exhaust passage 47 which branches from the material gas supply passage 32 opens to exhaust the gas. The gas exhausted by the pressure release operation of the pressure releasing device 46 flows through the pressure releasing exhaust passage 47 and the remaining fuel gas exhaust passage 37. The cooler 42 cools the gas. Then, the gas is exhausted to outside the fuel cell system through the burner 43 and the combustion exhaust gas passage 45. At this time, the controller 48 actuates the combustion fan 44. The combustion fan 44 supplies the air to the burner 43. The air is mixed with the gas exhausted from the pressure releasing device 46 to the burner 43 through the pressure releasing exhaust passage 47, the remaining fuel gas exhaust passage 37 and the cooler 42 and is exhausted to outside the fuel cell system 45 through the combustion exhaust gas passage 45.

The above specific operation is controlled by the controller 48.

Although in the configuration of the fuel cell system according to Example 4, since the pressure releasing device 46 is disposed on the material gas supply passage 32, the pressure releasing device 46 opens to exhaust the gas to the pressure releasing exhaust passage 47, thereby suppressing a pressure rise, if the pressure of the material gas flowing through the material gas supply passage 32 reaches a predetermined pressure (e.g., 50kPa) or more, because of a temporary passage clogging at downstream side of the material gas supply passage 32, reduction of a hydrogen consumption amount in the fuel cell 36, closing of the passage by the on-off valves 39, 40 and 41.

In this case, when the operation continues under a state where the pressure of the material gas reaches a predetermined pressure (e.g., 50kPa) or more, the pressurization device 46 exhausts the supplied material gas, and the material gas is supplied to the burner 43 through the pressure releasing exhaust passage 47, the remaining fuel gas exhaust passage 37 and the cooler 42, and combusted therein. On the other hand, when the operation stops, the material gas present in a portion of the material gas supply passage 32 which is downstream of the pressure releasing device 46, a mixture gas of the material gas and steam which is present at upstream side relative to the reforming catalyst of the reformer 31, and steam generated by the water evaporator 3 in a later time are exhausted through the steam supply passage 4. The exhausted gas is supplied to the cooler 42 through the pressure releasing passage 47 and the remaining fuel gas exhaust passage 37 and cooled therein. The cooler 8 cools and condenses the steam contained in the gas into water which is removed. Thereafter, the gas is exhausted to outside the fuel cell system through the burner 43 and the combustion exhaust gas passage 45.

In accordance with the configuration of the fuel cell system according to Example 4, since the gas exhausted to outside the fuel cell system through the pressure releasing passage 46 is free from carbon monoxide contained in the fuel gas flowing through the fuel gas supply passage 35, regardless of whether the operation continues, the gas can be exhausted safely. When the operation stops, the exhausted gas is cooled by the cooler 42 and then is exhausted to outside the fuel cell system through the combustion exhaust gas passage 45. Therefore, it is possible to achieve reduction of a temperature and volume of the exhausted gas. When the exhausted gas contains the steam, an amount of the exhausted gas can be further reduced.

In accordance with the configuration of the fuel cell system of this example, the cooler 42 which is a single component, has two functions as follows. The cooler 42 cools the remaining fuel gas supplied to the burner 43 or the fuel gas which has bypassed to condense the steam contained therein during a normal operation of the fuel cell system and cools the gas exhausted from the pressure releasing device 46 when the pressure releasing device 46 is exhausting the gas. Thus, reduction of cost is achieved.

Further, in accordance with the configuration of the fuel cell system according to Example 4, when the pressure releasing device 46 opens and exhausts the gas, the controller 48 actuates the combustion fan 24 to supply the air to the burner 21. During the operation, the gas exhausted from the pressure releasing device 46 is combusted together with the remaining fuel gas or the fuel gas bypassed, while when the operation stops, the burner 43 mixes the gas exhausted from the pressure releasing device 46 with the air. Therefore, the material gas which is a combustible gas can be diluted and exhausted to outside the fuel cell system. As a result, the gas can be exhausted safely.

Although in the configuration of the fuel cell system according to Exampe 4, the pressure releasing device 46 is disposed on the pressure releasing exhaust passage 47 which branches from the material gas supply passage 32, the gas can be exhausted safely, and reduction of the temperature and volume of the exhausted gas can be achieved in the same manner by disposing the pressure releasing device 46 on the material gas supply passage 32.

Although a release pressure of the pressure releasing device 46 of this example is 50kPa, the pressure is not limited to this, but may be set as desired within an allowable pressure range of the reformer 31 and the fuel cell 36.

Although in this example, the pressure releasing exhaust passage 47 exhausts the gas to a portion of the remaining fuel gas exhaust passage 37 which is upstream of the cooler 42 and downstream of the on-off valve 40, it may exhaust the gas to a portion of the bypass passage 38 which is upstream of the cooler 42 and downstream of the on-off valve 41, because the gas can be exhausted to outside the fuel cell system through the bypass passage 38, the remaining fuel gas exhaust passage 37, the cooler 42, the burner 43 and the combustion exhaust gas passage 45.

### (Example 5)

A hydrogen generator according to Example 5 exemplarily shows a configuration in which a water evaporator is provided within a reformer.

### [Configuration of Hydrogen Generator]

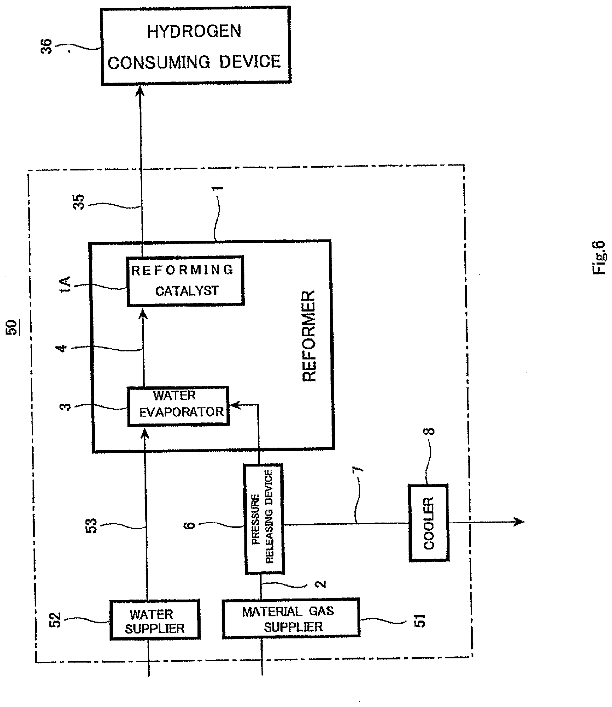

Fig. 6 is a block diagram showing a schematic configuration of a hydrogen generator according to Example 5. In the following drawings, the same or corresponding constituents are designated by the same reference numerals and will not be described repetitively.

As shown in Fig. 6, a hydrogen generator 50 according to Example 5 includes a reformer 1 having a reforming catalyst 1A, a raw material supply passage 2, a water evaporator 3, a steam supply passage 4, a pressure releasing device 6, an exhaust passage 7, and a cooler 8, and the pressure releasing device 6 is configured to release a pressure when a pressure in a passage downstream of the pressure releasing device 6 reaches a predetermined pressure or more.

The material gas supply passage 2 has an upstream end connected to a gas infrastructure line (not shown) and a downstream end connected to the water evaporator 3. A material gas supplier 51 is provided on the material gas supply passage 2. The pressure releasing device 6 is provided at a portion of the material gas supply passage 2 which is downstream of the material gas supplier 51. A raw material (gas) may be a material from which a hydrogen-containing gas can be generated through a reforming reaction using the raw material and the steam. The raw material which contains an organic compound composed of at least carbon and hydrogen, for example, hydrocarbon such as ethane and propane, may be used.

The material gas supplier 51 is configured to supply the raw material to the reforming catalyst 21A while controlling its flow rate. The material gas supplier 51 may have any configuration so long as it is capable of supplying a raw material while controlling its flow rate and of stopping supplying the raw material, and may be, for example, a single flow control valve or a combination of a booster pump and the flow control valve.

The pressurization device 6 may be configured to perform a pressure release operation when a pressure in the material gas supply passage 2 (and steam supply passage 4 connected to the material gas supply passage 2 via the water evaporator 3) reaches a predetermined pressure (e.g., 50kPa) or more. As the pressure releasing device 6, for example, a pressure control valve actuated mechanically (physically) when the pressure reaches a predetermined pressure or more, may be used. Alternatively, the pressure releasing device 6 may include a pressure control valve and a pressure detector and may be configured to actuate the pressure control valve based on a pressure in the material gas supply passage 2 which is detected by the pressure detector. In a further alternative, the pressure releasing device 6 may include a pressure control valve which may be configured to be actuated in accordance with a control signal from a controller (not shown) for controlling the hydrogen generator 50.

The pressure releasing exhaust passage 7 is connected to the pressure releasing device 6. The gas containing the steam which is exhausted from the pressure releasing device 6 is exhausted to outside the hydrogen generator 50 through the pressure releasing exhaust passage 7. The cooler 8 is provided on the pressure releasing passage 7 and is configured to cool the gas flowing through the pressure releasing exhaust passage 7. The cooler 8 may have any configuration so long as it is capable of cooling the gas flowing through the pressure releasing exhaust passage 7, and for example, a heat exchanger, a fan such as a blower or a sirocco fan may be used. Thus, the gas flowing through the pressure releasing exhaust passage 7 is cooled and a temperature and volume of the gas exhausted to outside the hydrogen generator 50 can be reduced. When the exhausted gas contains the steam, the steam is condensed into water and thereby the amount of the exhausted gas can be reduced.

A water supply passage 53 is connected to the water evaporator 3, and the water supplier 52 is provided on the water supply passage 53. The water supplier 52 is configured to supply from a water supply source (e.g., tap water, water tank) the water to the water evaporator 3 while controlling a flow rate of the water after a purifier has purified the water. The water supplier 52 may have any configuration so long as it is capable of supplying water to the water evaporator 3 while controlling its flow rate and of stopping supplying of the water to the water evaporator 3, and may be for example, a single flow control valve or a combination of a pump and the flow control valve.

The water evaporator 3 is configured to heat the water supplied from the water supplier 52 via the water supply passage 53 to generate the steam. Furthermore, the reforming catalyst 1A is connected to the water evaporator 3 via the steam supply passage 4.

The reforming catalyst 1A may be, for example, a material which serves as a catalyst in the steam reforming reaction for generating the hydrogen-containing gas from the material gas and the steam, and may be a ruthenium based catalyst with ruthenium (Ru) carried on a catalyst carrier such as alumina, a nickel based catalyst with nickel (Ni) carried on a similar catalyst carrier, etc. To reduce a cost, the nickel catalyst containing nickel as catalyst metal is preferably used. In the reforming catalyst 1A of the reformer 1, through the reforming reaction between the raw material supplied from the material gas supplier 51 and the steam supplied from the water evaporator 3, the hydrogen-containing gas (fuel gas) is generated. The generated fuel gas is supplied to a hydrogen consuming device (e.g., fuel cell, a hydrogen storage tank) 36 via the fuel gas supply passage 35.

### [Operation of Hydrogen Generator according to the invention]

Subsequently, an operation of the hydrogen generator 50 according to the inventionwill be described.

Initially, the material gas supplier 51 and the water evaporator 52 operate, to supply the material gas and the water to the water evaporator 3 in the reformer 1, via the material gas supply passage 2 and the water supply passage 53, respectively. In the water evaporator 3, the water supplied from the water supplier 52 is heated to generate the steam. In addition, in the water evaporator 3, the material gas supplied from the material gas supplier 51 is heated. The generated steam and the heated material gas are supplied to the reforming catalyst 1A through the steam supply passage 4.

In the reforming catalyst 1A, the hydrogen-containing gas (fuel gas) is generated through the reforming reaction between the raw material and the steam. The generated fuel gas is supplied to the hydrogen consuming device 36 via the fuel gas supply passage 35.

In the hydrogen generator 50 according to Example 1, during fuel gas generating operation (fuel gas generating operation of the hydrogen generator 50), the pressure releasing device 6 is actuated, when the steam flowing through the steam supply passage 4 which is downstream of the material gas supply passage 2 condenses into water, the water clogs the steam supply passage 4 for a certain time, a pressure in the reformer 1 increases, and hence a pressure in the material gas supply passage 2 increases up to a predetermined pressure (e.g., 50kPa) or more.

In a case where the hydrogen generator 50 is configured to stop an operation for generating the fuel gas at this time (when the pressure in the material gas supply passage 2 reaches the predetermined pressure or more), the material gas supplier 51 and the water supplier 52 stop. The pressure releasing device 6 is actuated, thereby exhausting to the pressure releasing exhaust passage 7, the material gas in the material gas supply passage 2. In addition, the pressure releasing device 6 exhausts the material gas and the steam which are present in the water evaporator 3 and the steam supply passage 4, to the pressure releasing passage 7, through the material gas supply passage 2. Furthermore, the water present in the water evaporator 3 is evaporated into the steam by residual heat in the water evaporator 3. The generated steam is exhausted from the pressure releasing device 6 to the pressure releasing exhaust passage 7 through the material gas supply passage 2.

On the other hand, in a case where the hydrogen generator 50 is configured not to stop the operation for generating the fuel gas when the pressure in the material gas supply passage 2 reaches the predetermined pressure or more, the material gas in the material gas supply passage 2 is exhausted from the pressure releasing device 6 to the pressure releasing exhaust passage 7.

Then, the material gas which has been exhausted to the pressure releasing exhaust passage 7, is cooled by the cooler 8, its temperature is lowered, and its volume is reduced while flowing through the pressure releasing passage 7, and the resulting material gas is exhausted to outside the hydrogen generator 50. The cooler 8 cools and condenses the steam exhausted to the pressure releasing exhaust passage 7 into water, which is discharged to outside the hydrogen generator 50.

Thus, in the hydrogen generator 50 according to Example 5, like the hydrogen generator according to Example 1, even when a passage (including the reforming catalyst 1A) downstream of the material gas supply passage 2 is clogged for a certain time, and the pressure in the material gas supply passage 2 reaches the predetermined pressure or more, the pressure releasing device 6 is actuated, thereby suppressing a rise in the pressure in the material gas supply passage 2 and hence a rise in the pressure in the reformer 1. Furthermore, the cooler 8 cools the gas exhausted to the pressure releasing passage 7 by the pressure release operation, thereby reducing a temperature and amount of the gas exhausted to outside the hydrogen generator 50.

In the hydrogen generator 50 according to Example 5, since the pressure releasing device 6 is provided on a passage (material gas supply passage 2 in Example 5) upstream of the reforming catalyst 1A of the reformer 1 like the hydrogen generator according to Example 1, it is possible to suppress carbon monoxide generated in the reforming catalyst 1A from being exhausted to outside the hydrogen generator 50, as compared to the fuel cell power generation apparatus disclosed in the above patent literature 1.

Although in the hydrogen generator 50 according to Example 5, the hydrogen-containing gas (reformed gas) generated in the reforming catalyst 1A of the reformer 1 is exhausted to the hydrogen consuming device 36, the present invention is not limited to this. Alternatively, the hydrogen-containing gas which has flowed through a shift converter inside the hydrogen generator 50, which includes a shift catalyst (e.g., copper-zinc based catalyst) for reducing carbon monoxide in the hydrogen-containing gas exhausted from the reformer 1 or a carbon monoxide remover inside the hydrogen generator 50, which includes an oxidization catalyst (e.g., ruthenium based catalyst) or methanation catalyst (e.g., ruthenium based catalyst) may be sent to the hydrogen consuming device 36.

Although in the hydrogen generator 50 according to Example 5, the pressure releasing device 6 is provided in the material gas supply passage 2, the present invention is not limited to this, but a branch passage may be connected to the material gas supply passage 2 and the pressure releasing device 6 may be provided at the branch passage 6.

Although in the hydrogen generator 50 according to Example 5, the pressure in the material gas supply passage 2 at which the pressure releasing device 6 is actuated is set to 50kPa, the pressure is not limited to this, but may be set as desired within an allowable pressure range of the hydrogen generator 50 and the hydrogen consuming device 36.

### [Modification example 1]

Next, a modification example of the hydrogen generator 50 according to Example 5 will be described.

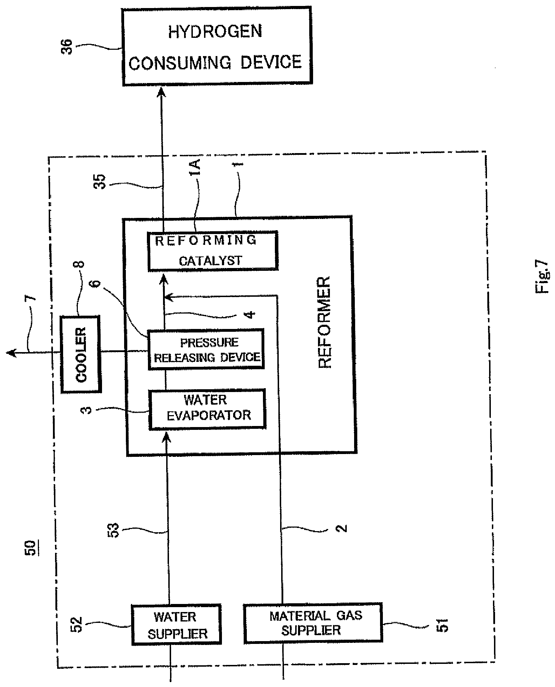

Fig. 7 is a block diagram showing a schematic configuration of a hydrogen generator of modification example 1 of the hydrogen generator 50 according to Example 5.

As shown in Fig. 7, in the hydrogen generator 50 of modification example 1, the pressure releasing device 6 is connected to the steam supply passage 4 and a downstream end of the material gas supply passage 2 is connected to a portion of the steam supply passage 4. Therefore, the steam generated in the water evaporator 3 and the material gas supplied from the material gas supplier 51 flow through a passage of the steam supply passage 4 which is downstream of a portion where the material gas supply passage 2 is connected to the steam supply passage 4.

Thus, in the hydrogen generator 50 of modification example 1 configured as described above, even when a passage (including the reforming catalyst 1A) downstream of the steam supply passage 4 is clogged for a certain time, and the pressure in the steam supply passage 4 reaches the predetermined pressure or more, the pressure releasing device 6 is actuated, thereby exhausting the steam and the like in the steam supply passage 4 to outside the hydrogen generator 50 through the pressure releasing exhaust passage 7. Therefore, it is possible to suppress a rise in the pressure in the steam supply passage 4 and hence a rise in the pressure in the reformer 1.

In the hydrogen generator 50 of modification example 1, it is possible to reduce a temperature and amount of the gas exhausted to outside the hydrogen generator 50, like the hydrogen generator 50 according to Example 5. In the hydrogen generator 50 according to modification example 1, it is possible to suppress carbon monoxide generated in the reforming catalyst 1A from being exhausted to outside the hydrogen generator 50, like the hydrogen generator 50 according to Example 5.

Although in the hydrogen generator 50 of modification example 1, the water evaporator 3 is disposed inside the reformer 1, the present invention is not limited to this, but the water evaporator 3 may be positioned outside the reformer 1 like the hydrogen generator according to Example 1. Although in the hydrogen generator 50 of modification example 1, the pressure releasing device 6 is provided at the steam supply passage 4 in a location upstream of a portion where the material gas supply passage 2 is connected to the steam supply passage 4, the present invention is not limited to this, but the pressure releasing device 6 may be provided in a location downstream of the portion where the material gas supply passage 2 is connected to the steam supply passage 4.

### [Modification example 2]

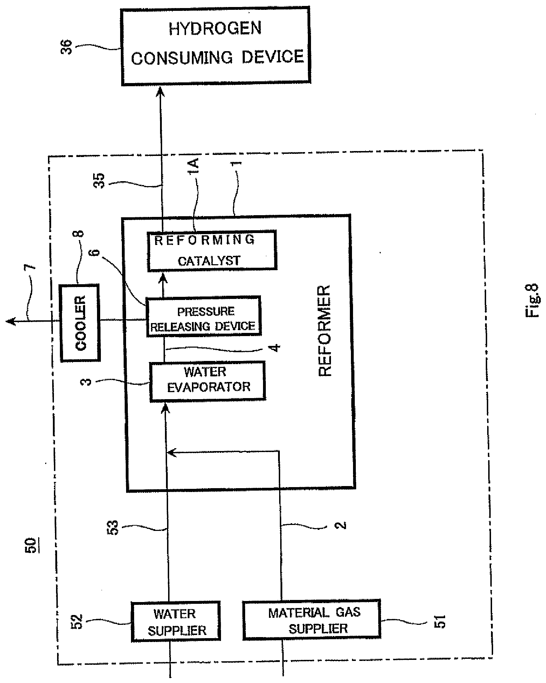

Fig. 8 is a block diagram showing a schematic configuration of a hydrogen generator of modification example 2 of the hydrogen generator 50 according to Example 5.

As shown in Fig. 8, the hydrogen generator 50 of modification example 2 has basically the same configuration as that of the hydrogen generator 50 of modification example 1, but is different from the same in that a downstream end of the material gas supply passage 2 is connected to a portion of the water supply passage 53. Therefore, the water supplied from the water supplier 52 and the material gas supplied from the material gas supplier 51 flow through a passage of the water supply passage 53 which is downstream of a portion where the material gas supply passage 2 is connected to the water supply passage 53.

In the hydrogen generator 50 of modification example 2 configured as described above, the advantages as those in the hydrogen generator 50 according to Example 5 are achieved.

### (Example 6)

A hydrogen generator according to Example 6 includes a combustor for heating a reformer, a combustion exhaust gas passage used to flow a combustion exhaust gas exhausted from the combustor, and a first cooler provided so as to bridge the combustion exhaust gas passage and the exhaust passage.

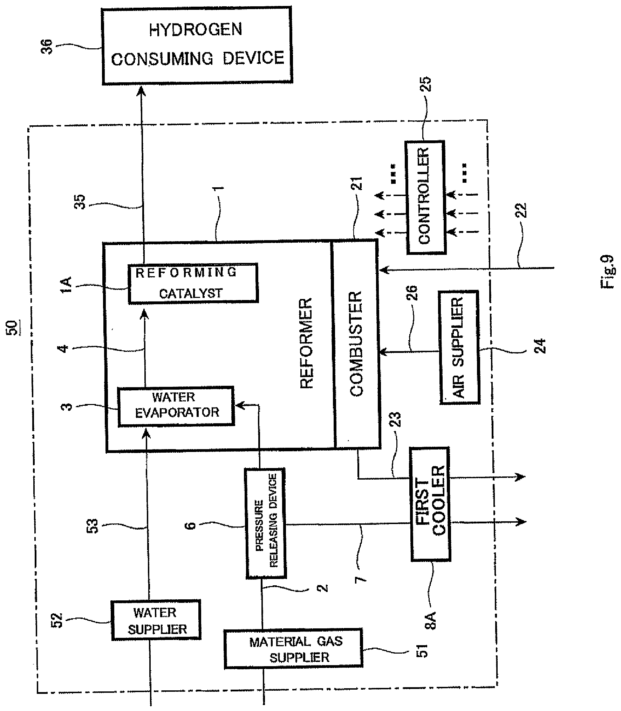

Fig. 9 is a block diagram showing a schematic configuration of a hydrogen generator according to Example 6.

As shown in Fig. 9, the hydrogen generator 50 according to Example 6 has basically the same configuration as that of the hydrogen generator 50 according to Example 5 but is different from the same in that the hydrogen generator 50 according to Example 6 includes a combustor 21, an air supplier 24 and a controller 25. To be specific, a combustion gas supply passage 22 used to supply a combustion fuel is connected to the combustor 21, and the air supplier 24 is connected to the combustor 21 via a combustion air supply passage 26 used to supply combustion air. As the air supplier 24, for example, a fan such as a blower or sirocco fan may be used. The combustion fuel (e.g., the raw material or the hydrogen-containing gas exhausted from the reformer 1) and the combustion air are supplied to the combustor 21 and are combusted therein to generate a combustion exhaust gas. The generated combustion exhaust gas heats the reforming catalyst 1A of the reformer 1 and the water evaporator 3, and then is exhausted to outside the hydrogen generator 50 through the combustion exhaust gas passage 23.

In the hydrogen generator 50 according to Example 6, the cooler 8 is constituted by a first cooler 8A for cooling the combustion exhaust gas flowing through the combustion exhaust gas passage 23 and the gas (including the steam) flowing through the pressure releasing exhaust passage 7. The first cooler 8A is constituted by, in Example 6, a heat exchanger, which includes a first passage, a second passage and a third passage. The pressure releasing exhaust passage 7 is connected to the first passage in the first cooler 8A, the combustion exhaust gas passage 23 is connected to the second passage in the first cooler 8A and a cooling medium passage (not shown) is connected to the third passage in the first cooler 8A. Thereby, by flowing a cooling medium through the third passage in the first cooler 8A via the cooling medium passage, the gas flowing through the first passage and the combustion exhaust gas flowing through the second passage can be cooled. As the cooling medium, for example, there is an anti-freezing fluid such as water or ethylene glycol.

The controller 25 may be any device so long as it controls components constituting the hydrogen generator 50, and may be constituted by, for example, a microprocessor, a CPU, etc. The controller 25 may be a controller group consisting of plural controllers which cooperate with each other to control the hydrogen generator 50 as well as a single controller. The controller 25 may include a memory section constituted by a memory and a timer in addition to a processing unit such as a microprocessor, or CPU.

In the hydrogen generator 50 according to Example 6 configured as described above, the same advantage as that of the hydrogen generator 50 according to Example 5 are achieved. In the hydrogen generator 50 according to Example 6, the first cooler 8A has two functions as follows. The first cooler 8A cools the combustion exhaust gas exhausted from the combustor 21 during a normal operation (fuel gas generating operation) of the hydrogen generator 50, and cools the gas flowing through the pressure releasing exhaust passage 7 when the pressure releasing device 6 is actuated to exhaust gas to the pressure releasing exhaust passage 7. Thus, reduction of cost is achieved.

Although in the hydrogen generator 50 according to Example 6, the first cooler 8A is constituted by the heat exchanger which includes three passages, the present invention is not limited to this but the heat exchanger may include two passages. In this case, during the operation of the pressure releasing device 6, the controller 25 stops supplying the combustion fuel to the combustor 21 to stop combustion in the combustor 21 and causes the air supplier 24 to operate (continue the operation of the air supplier 24). Thereby, the air is supplied from the air supplier 24 to the combustion exhaust gas passage 23 via the combustor 21 and the air flowing through the combustion exhaust gas passage 23 serves as a coolant. Thus, the first cooler 8A cools the gas flowing through the pressure releasing exhaust passage 7. To increase a cooled amount of the gas flowing through the pressure releasing exhaust passage 7, an operation amount of the air supplier 24 is preferably increased and the air supplier 24 is more preferably operated with a maximum operation amount.

Although in the hydrogen generator 50 according to Example 6, the first cooler 8A is constituted by the heat exchanger, the present invention is not limited to this, but the first cooler 8A may have any configuration so long as the first cooler 8A is capable of cooling each of the combustion exhaust gas flowing through the combustion exhaust gas passage 23 and the gas flowing through the pressure releasing exhaust passage 7. For example, a fan may be used.

### (Example 7)

A fuel cell system according to Example 7 exemplarily shows a configuration in which a cooler is constituted by a second cooler provided so as to bridge an exhaust passage and a remaining fuel gas passage.

### [Configuration of Fuel Cell System]

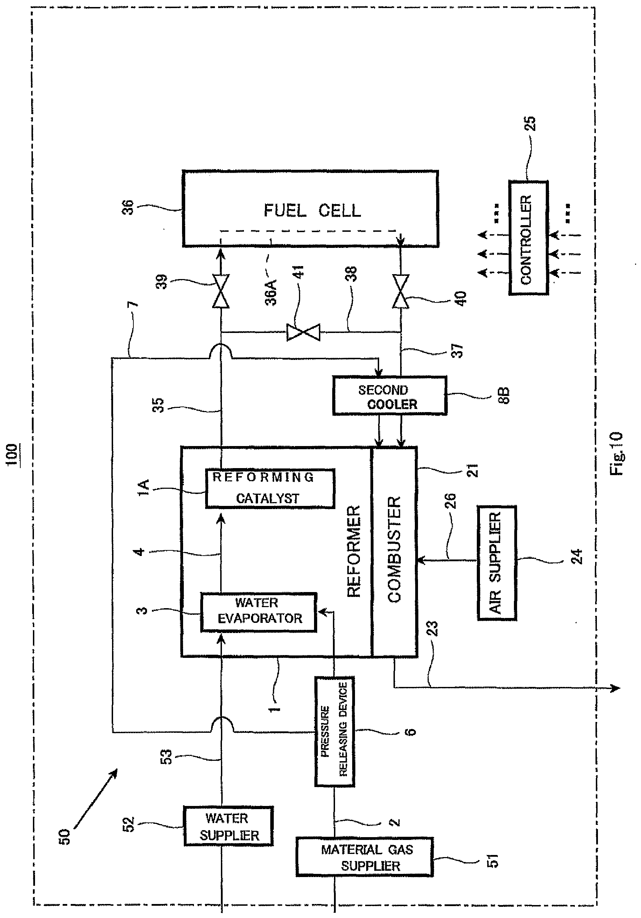

Fig. 10 is a block diagram showing a schematic configuration of a fuel cell system according to Example 7.

As shown in Fig. 10, a fuel cell system 100 according to Example 7 includes the hydrogen generator 50, the fuel cell 36, and a remaining fuel gas exhaust passage 37. The hydrogen generator 50 used in Example 7 has basically the same configuration as that of the hydrogen generator 50 according to Example 6, but is different from the same in that the cooler 8 is constituted by a second cooler 8B provided so as to bridge the pressure releasing exhaust passage 7 and the remaining fuel gas exhaust passage 37, and a downstream end of the pressure releasing exhaust passage 7 is connected to the combustor 21.

In the fuel cell system 100 according to Example 7, a downstream end of the fuel gas supply passage 35 is connected to an inlet of a fuel gas passage 36A of the fuel cell 36 and the fuel gas generated in the hydrogen generator 50 is supplied to the fuel gas passage 36A. An outlet of the fuel gas passage 36A is connected to the combustor 21 via the remaining fuel gas exhaust passage 37.

An off-off valve 39 is provided in a portion of the fuel gas supply passage 35. The on-off valve 39 may have any configuration so long as it is a device configured to permit/inhibit the passage of the gas such as the fuel gas through the fuel gas supply passage 35, and for example, an electromagnetic valve may be used.

An upstream end of the bypass passage 38 is connected to a portion of the fuel gas supply passage 35 which is upstream of the on-off valve 39, while a downstream end thereof is connected to the remaining fuel gas exhaust passage 37. The on-off valve 41 is provided in a portion of the bypass passage 38. The on-off valve 41 may have any configuration so long as it is a device configured to permit/inhibit the passage of the gas such as the fuel gas through the bypass passage 38, and for example, an electromagnetic valve may be used.

An on-off valve 40 is provided in the remaining fuel gas exhaust passage 37 in a location upstream of a portion where the bypass passage 38 is connected to the remaining fuel gas exhaust passage 37. The on-off valve 40 may have any configuration so long as it is a device configured to permit/inhibit the passage of the gas such as the remaining fuel gas through the remaining fuel gas exhaust passage 37, and for example, an electromagnetic valve may be used.

The second cooler 8B is provided at the remaining fuel gas exhaust passage 37, in a location downstream of the portion where the bypass passage 38 is connected to the remaining fuel gas exhaust passage 37, such that it is provided so as to bridge the remaining fuel gas exhaust passage 37 and the pressure releasing exhaust passage 7. In Example 7, the second cooler 8B is constituted by a heat exchanger which includes a first passage, a second passage and a third passage. The pressure releasing passage 7 is connected to the first passage in the second cooler 8B, the remaining fuel gas exhaust passage 37 is connected to the second passage in the second cooler 8B and a cooling medium passage (not shown) is connected to the third passage in the second cooler 8B. Thereby, by flowing a cooling medium through the third passage in the second cooler 8B via the cooling medium passage, each of the gas flowing through the first passage and the remaining fuel gas flowing through the second passage can be cooled.

As the fuel cell 36 in the fuel cell system 100 according to Example 7, a general fuel cell is used, and therefore detailed description thereof is omitted. In Example 7, the controller 25 of the hydrogen generator 50 is configured to control the constituents in the fuel cell system 100.

### [Operation of Fuel Cell System]

Subsequently, an operation of the fuel cell system 100 according to Example 7 will be described. The following operation is performed in such a manner that the controller 25 controls the constituents in the fuel cell system 100.

Firstly, the on-off valve 39 and the on-off valve 40 are closed and the on-off valve 41 is opened. The material gas supplier 51 operates to supply the material gas to the combustor 21 as a combustion fuel, through the material gas supply passage 2, the water evaporator 3, the steam supply passage 4, the fuel gas supply passage 35, the bypass passage 38 and the remaining fuel gas exhaust passage 37. Combustion air is supplied from the air supplier 24 to the combustor 21. The combustor 21 combusts the combustion fuel and the combustion air to generate the combustion exhaust gas. The generated combustion exhaust gas heats the reforming catalyst lAin the reformer 1 and the water evaporator 3 and is exhausted to outside the fuel cell system 100 through the combustion exhaust gas passage 23.

When the reforming catalyst 1A or the water evaporator 3 has been heated sufficiently, the water supplier 52 operates, so that the material gas and the water are supplied to the water evaporator 3 in the reformer 1 through the material gas supply passage 2 and the water supply passage 53, respectively. The water evaporator 3 heats the water supplied from the water supplier 52 to generate the steam. The water evaporator 3 heats the material gas supplied from the material gas supplier 51. The generated steam and the heated material gas are supplied to the reforming catalyst 1A through the steam supply passage 4.

The reforming catalyst 1A allows the hydrogen-containing gas (fuel gas) to be generated through the reforming reaction between the raw material and the steam. By opening the on-off valve 39 and the on-off valve 40 and closing the on-off valve 41, the generated fuel gas is supplied to the fuel gas passage 36A in the fuel cell 36 via the fuel gas supply passage 35. The timing when the on-off valves 39 and 40 are opened and the on-off valve 41 is closed is varied depending on a type of the fuel cell 36. When the fuel cell 36 is constituted by, for example, a polymer electrolyte fuel cell, the timing occurs after carbon monoxide has been removed sufficiently from the fuel gas.

When the fuel gas is supplied to the fuel gas passage 36A in the fuel cell 36, it is supplied to an anode (not shown) while flowing through the fuel gas passage 36A and electrochemically reacts with an oxidizing gas supplied to a cathode which is not shown, thereby generating an electric power. A remaining fuel gas, left unconsumed in the anode, is supplied to the combustor 21 through the remaining fuel gas exhaust passage 37. The remaining fuel gas supplied to the combustor 21 is used as the combustion fuel. The steam contained in the remaining fuel gas is condensed by the second cooler 8B and the resulting water is stored.

In the fuel cell system 100 according to Example 7, during a fuel gas generating operation of the hydrogen generator 50 (fuel gas generating operation of the hydrogen generator 50), if the steam flowing through the steam supply passage 4 downstream of the material gas supply passage 2 is condensed to generate water, and the steam supply passage 4 is clogged with this water for a certain time, or the on-off valve such as the on-off valve 39 operates incorrectly, or a consumption amount of the fuel gas in the fuel cell 36 rapidly decreases, for example, a pressure in the reformer 1 increases, and hence a pressure in the material gas supply passage 2 increases up to a predetermined pressure (e.g., 50kPa) or more. In this case, the pressure releasing device 6 is actuated.

In a case where the hydrogen generator 50 is configured to stop an operation for generating the fuel gas at this time (when the pressure in the material gas supply passage 2 reaches the predetermined pressure or more), the material gas supplier 51 and the water supplier 52 stop. The pressure releasing device 6 is actuated, to exhaust the material gas in the material gas supply passage 2 to the pressure releasing exhaust passage 7. In addition, the pressure releasing device 6 exhausts the material gas and the steam which are present in the water evaporator 3 and the steam supply passage 4, to the pressure releasing exhaust passage 7, through the material gas supply passage 2. Furthermore, the water present in the water evaporator 3 is evaporated into the steam by residual heat in the water evaporator 3. The generated steam is exhausted from the pressure releasing device 6 to the pressure releasing exhaust passage 7 through the material gas supply passage 2.

Then, the material gas which has been exhausted to the pressure releasing exhaust passage 7, is cooled by the second cooler 8B, its temperature is lowered, and its volume is reduced while flowing through the pressure releasing exhaust passage 7, and the resulting material gas is supplied to the combustor 21. The material gas supplied to the combustor 21 is diluted by the air supplied from the air supplier 24 to the combustor 21 through the combustion air supply passage 26, and the diluted gas is exhausted to outside the fuel cell system 100 through the combustion exhaust gas passage 23. The steam exhausted to the pressure releasing exhaust passage 7 is cooled and condensed by the second cooler 8B into water, which is stored in the fuel cell system 100.

On the other hand, in a case where the hydrogen generator 50 is configured not to stop the operation for generating the fuel gas when the pressure in the material gas supply passage 2 reaches the predetermined pressure or more, the material gas in the material gas supply passage 2 is exhausted from the pressure releasing device 6 to the pressure releasing exhaust passage 7. The material gas which has been exhausted to the pressure releasing exhaust passage 7, is cooled by the second cooler 8B, its temperature is lowered, and its volume is reduced while flowing through the pressure releasing exhaust passage 7, and the resulting material gas is supplied to the combustor 21. The combustor 21 combusts the material gas to generate the combustion exhaust gas. The generated combustion exhaust fuel gas is exhausted to outside the fuel cell system 100 through the combustion exhaust gas passage 23.

Therefore, in the fuel cell system 100 according to Example 7, even when the material gas is exhausted from the pressure releasing device 6 to the pressure releasing exhaust passage 7, it can be exhausted to outside the fuel cell system 100 safely.

As should be understood, in the fuel cell system 100 according to Example 7, like the hydrogen generator 50 according to Example 5, even when a passage (including the reforming catalyst 1A) downstream of the material gas supply passage 2 is clogged for a certain time, and the pressure in the material gas supply passage 2 reaches the predetermined pressure or more, the pressure releasing device 6 is actuated, thereby suppressing a rise in the pressure in the material gas supply passage 2 and hence a rise in the pressure in the reformer 1.

In the fuel cell system 100 according to Example 7, when the pressure releasing device 6 is actuated and the fuel gas generating operation of the hydrogen generator 50 stops, the second cooler 8B cools the gas exhausted to the pressure releasing exhaust passage 7 by the pressure release operation, thereby lowering a temperature of the gas exhausted to outside the fuel cell system 100. In addition, by diluting the gas with the air, the gas can be exhausted safely. On the other hand, when the pressure releasing deice 6 is actuated and the fuel gas generating operation of the hydrogen generator 50 is not stopped, the combustor 21 combusts the gas and the combustion exhaust gas can be exhausted to outside the fuel cell system 100 safely.

In the fuel cell system 100 according to Example 7, like the hydrogen generator 50 according to Example 5, since the pressure releasing device 6 is provided on a passage (material gas supply passage 2 in Example 5) upstream of the reforming catalyst 1A of the reformer 1, it is possible to suppress carbon monoxide generated in the reforming catalyst 1A from being exhausted to outside the hydrogen generator 50, as compared to the fuel cell power generation apparatus disclosed in the above patent literature 1.

Furthermore, in the fuel cell system 100 according to Example 7, the second cooler 8B has two functions as follows. During a normal operation (power generation operation) of the fuel cell system 100, the second cooler 8B cools the remaining fuel gas exhausted from the fuel cell 36 (to be precise, fuel gas passage 36A) so that the steam is not supplied to the combustor 21, thereby preventing misfire from occurring in the combustor 21, while when the pressure releasing device 6 is actuated to exhaust the gas to the pressure releasing exhaust passage 7, the second cooler 8B cools the gas flowing through the pressure releasing passage 7. Thus, reduction of cost is achieved.

Although in the fuel cell system 100 according to Example 7, the second cooler 8B is constituted by the heat exchanger, the present invention is not limited to this, but the second cooler 8B may have any configuration so long it is capable of cooling the remaining fuel gas flowing through the remaining fuel gas exhaust passage 37 and the gas flowing through the pressure releasing exhaust passage 7. For example, a fan may be used.

### (Example 8)

A fuel cell system according to Example 8 exemplarily shows a configuration in which a cooler is a constituted by a third cooler for cooling a remaining oxidizing gas flowing through a remaining oxidizing gas passage and a gas (containing steam) flowing through an exhaust passage.

### [Configuration of Fuel Cell System]

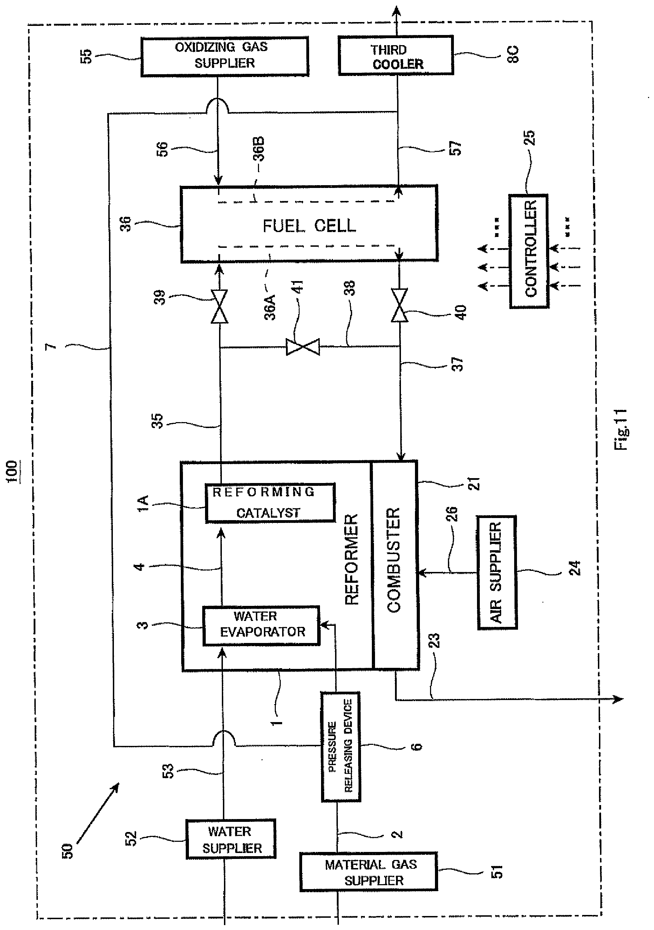

Fig. 11 is a block diagram showing a schematic configuration of a fuel cell system according to Example 8.

As shown in Fig. 11, the fuel cell system 100 according to Example 8 has basically the same configuration as that of the fuel cell system 100 according to Example 7 but is different from the same in that a downstream end of the pressure releasing exhaust passage 7 is connected to a remaining oxidizing gas passage 57 and the cooler 8 is constituted by a third cooler 8C for cooling a remaining oxidizing gas flowing through the remaining oxidizing gas passage 57 and a gas (containing steam) flowing through the pressure releasing exhaust passage 7.

To be specific, the fuel cell system 100 according to Example 8 includes an oxidizing gas supplier 55 and the remaining oxidizing gas passage 57. The oxidizing gas supplier 55 is connected to an inlet of an oxidizing gas passage 36B of the fuel cell 36 via an oxidizing gas supply passage 56. As the oxidizing gas supplier 55, any oxidizing gas supplier may be used so long as it is capable of supplying oxidizing gas (air) to the oxidizing gas passage 36B of the fuel cell 36 while controlling its flow rate, and for example, a fan such as a blower or a sirocco fan may be used.

The remaining oxidizing gas passage 57 is connected to an outlet of the oxidizing gas passage 36B. A downstream end of the pressure releasing exhaust passage 7 is connected to a portion of the remaining oxidizing gas passage 57. The third cooler 8C is provided at the remaining oxidizing gas passage 57 in a location downstream of a portion where the pressure releasing exhaust passage 7 is connected to the remaining oxidizing gas passage 57.

The third cooler 8C may have any configuration so long as it is capable of cooling the gas flowing through the pressure releasing exhaust passage 7 and the gas flowing through the remaining oxidizing gas passage 57. For example, a heat exchanger may be used, or a fan such as a blower or a sirocco fan may be used. Thereby, the gas flowing through the pressure releasing exhaust passage 7 and the gas flowing through the remaining oxidizing gas passage 57 can be cooled, and thus, reduction of a temperature and volume of the gas exhausted to outside the fuel cell system 100 can be reduced. When the exhausted gas contains the steam, the steam is condensed into water, and thus, an amount of the exhausted gas can be reduced.

### [Operation of Fuel Cell System according to the invention]

Subsequently, an operation of the fuel cell system 100 according to the inventionwill be described. The following operation is performed in such a manner that the controller 25 controls the components in the fuel cell system 100.

An operation which occurs before the fuel gas is supplied to the fuel gas passage 36A in the fuel cell 36 is identical to that of the fuel cell system 100 according to Example 7. When the fuel gas is supplied to the fuel gas passage 36A, the oxidizing gas is supplied from the oxidizing gas supplier 5 to the oxidizing gas passage 36B in the fuel cell 36 via the oxidizing gas supply passage 56. While flowing through the oxidizing gas passage 36B, the oxidizing gas is supplied to a cathode (not shown) of the fuel cell 36 and electrochemically reacts with the fuel gas supplied to the anode (not shown) of the fuel cell 36. The remaining oxidizing gas left unconsumed in the cathode is exhausted to the remaining oxidizing gas passage 57. While flowing through the remaining oxidizing gas passage 57, the remaining oxidizing gas is cooled by the third cooler 8C and is exhausted to outside the fuel cell system 100. The third cooler 8C condenses the steam contained in the remaining oxidizing gas into water and the water is stored.

Like the fuel cell system 100 according to Example 7, when a passage (including the reforming catalyst 1A) downstream of the material gas supply passage 2 is clogged for a certain time, and the pressure in the material gas supply passage 2 reaches the predetermined pressure or more, the pressure releasing device 6 is actuated. At this time, the controller 25 operates the oxidizing gas supplier 55 (causes the oxidizing gas supplier 55 to continue its operation) irrespective of whether it causes the hydrogen generator 50 to continue or stop the fuel gas generating operation.

As a result of this, the material gas exhausted from the pressure releasing device 6 to the pressure releasing exhaust passage 7 is supplied to the remaining oxidizing gas passage 57 through the pressure releasing exhaust passage 7, and is diluted with the oxidizing gas supplied from the oxidizing gas supplier 55 to the remaining oxidizing gas passage 57 through the oxidizing gas supply passage 56 and the oxidizing gas passage 36B. The diluted material gas is cooled by the third cooler 8C, its temperature is lowered, its volume is reduced, and is exhausted to outside the fuel cell system 100. Thus, in the fuel cell system 100 according to Example 8, the material gas can be exhausted safely.

The steam exhausted from the pressure releasing device 6 to the pressure releasing exhaust passage 7 flows through the remaining oxidizing gas passage 57. The third cooler 8C condenses the steam and the water is stored.

The fuel cell system 100 according to Example 8 can achieve the same advantages as those of the fuel cell system 100 according to Example 7.

### (Example 9)

A fuel cell system according to Example 9 exemplarily shows a configuration in which the third cooler is provided so as to bridge the remaining oxidizing gas passage and the exhaust passage.

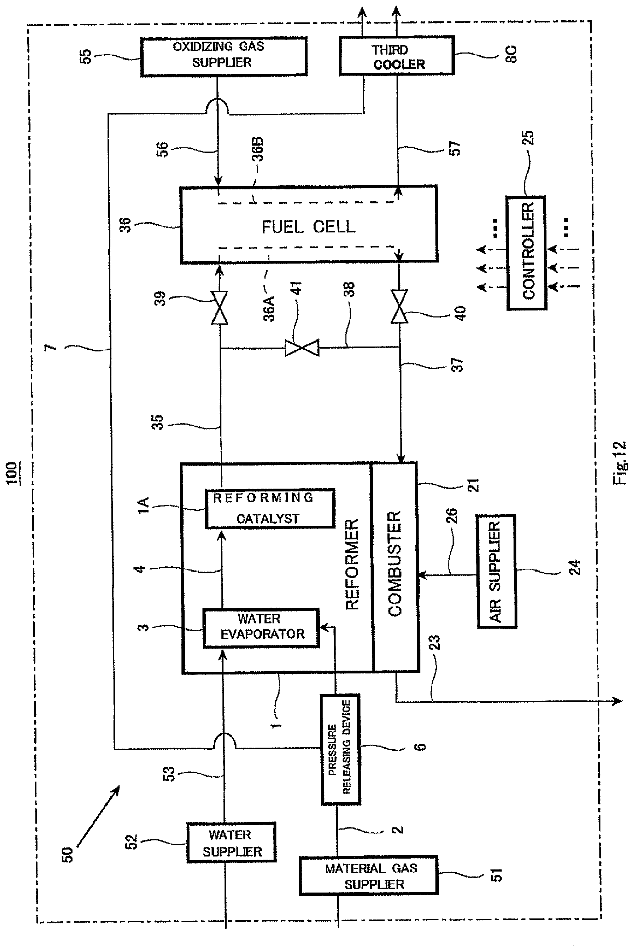

Fig. 12 is a block diagram showing a schematic configuration of a fuel cell system according to this example.

As shown in Fig. 12, the fuel cell system 100 according to Example 9 has basically the same configuration as that of the fuel cell system 100 according to Example 8, but is different from the same in that the third cooler 8C is provided so as to bridge the remaining oxidizing gas passage 57 and the pressure releasing exhaust passage 7. To be specific, in Example 9, the third cooler 8C is constituted by, a heat exchanger, which includes a first passage, a second passage and a third passage. The pressure releasing exhaust passage 7 is connected to the first passage in the third cooler 8C, the remaining oxidizing gas passage 57 is connected to the second passage in the third cooler 8C and a cooling medium passage (not shown) is connected to the third passage in the third cooler 8C. Thereby, by flowing a cooling medium through the third passage in third cooler 8C via the cooling medium passage, each of the gas flowing through the first passage and the remaining oxidizing gas flowing through the second passage can be cooled. As the third cooler 8C, a fan such as a blower and a sirocco fan may be used.

The fuel cell system 100 according to Example 9 configured as described above can achieve the same advantages as those of the fuel cell system 100 according to Example 8.

Although the fuel cell systems 100 in Example 7 to Example 9 use the hydrogen generator 50 according to Example 6, the present invention is not limited to this, but the fuel cell systems 100 in Example 7 to Example 9 may use the hydrogen generators 50 according to Example 1 to Example 3, Example 5 and modification example 1 and modification example 2.

Numerous modifications and alternative embodiments of the invention will be apparent to those skilled in the art in view of the foregoing description. Accordingly, the description is to be construed as illustrative only, and is provided for the purpose of teaching those skilled in the art the best mode of carrying out the invention. The details of the structure and/or function may be varied substantially without departing from the scope of the invention, as claimed.

### Industrial Applicability

A hydrogen generator and a fuel cell system using the hydrogen generator of the present invention, exhaust steam and material gas preferentially when a pressure rises, thereby exhausting the gas safely and lowering a temperature of the exhausted gas. Therefore, the hydrogen generator and the fuel cell system are useful, particularly in a fuel cell power generation system and the like which perform steam reforming.

### Reference Citation Lists

- 1, 11, 31: reformer
- 2, 12, 32: material gas supply passage
- 3, 13, 33: water evaporator
- 4, 14, 34: steam supply passage
- 5, 15: generated gas exhaust passage
- 6, 16, 46: pressure releasing device
- 7, 17, 47: pressure releasing exhaust passage
- 8, 18, 42: cooler
- 19, 48: controller
- 20: on-off device
- 21, 43: burner
- 22: combustion gas supply passage
- 23, 45: combustion exhaust gas passage
- 24, 44: combustion fan
- 25: controller
- 35: fuel gas supply passage
- 36: fuel cell
- 37: remaining fuel gas exhaust passage
- 38: bypass passage
- 39, 40, 41: on-off valve

## Claims

1. A method for operating a hydrogen generator, the hydrogen generator comprising the reformer, a water evaporator, a raw material supply passage, a steam supply passage, a pressure releasing device, a pressure releasing exhaust passage, and a cooler, the method comprising:
supplying raw material to a reforming catalyst of the reformer through the raw material supply passage;
generating steam with the water evaporator;
supplying the steam generated in the water evaporator to the reforming catalyst of the reformer through the steam supply passage;
steam reforming the raw material and the steam in the reformer to generate a hydrogen-containing gas;
releasing a pressure by operating the pressure releasing device, provided at the raw material supply passage or the steam supply passage and flowing a gas exhausted from the pressure releasing device and containing the steam through the pressure releasing exhaust passage; and
cooling the gas exhausted from the pressure releasing device and flowing through the pressure releasing exhaust passage with the cooler provided at the pressure releasing exhaust passage,
wherein the pressure releasing device includes an on-off device for performing a pressure release operation to preferentially exhaust the material gas and the steam which are present upstream of the reforming catalyst of the reformer, and
wherein, during generation of the hydrogen-containing gas in the reformer, the pressure releasing device performs the pressure release operation, when the pressure in the raw material supply passage or the steam supply passage, which is provided with the pressure releasing device, reaches a predetermined pressure or more and a pressure rises in the reformer, the generated gas exhaust passage or a device outside the hydrogen generator which is connected to a downstream side of the generated gas exhaust passage.

2. The method according to Claim 1, the hydrogen generator further comprising a combustor, and a combustion exhaust gas passage, the method further comprising:
heating the reformer using the combustor; and
flowing a combustion exhaust gas exhausted from the combustor through the combustion exhaust gas passage;
wherein the cooler is a first cooler for cooling the combustion exhaust gas flowing through the combustion exhaust gas passage and the gas flowing through the exhaust passage.

3. The method according to Claim 2,
wherein the combustion exhaust gas passage is connected to the exhaust passage; and
the first cooler is provided at the exhaust passage in a location downstream of a location where the combustion exhaust gas passage is connected to the exhaust passage.

4. The method according to Claim 2, wherein the first cooler is provided so as to bridge the combustion exhaust gas passage and the exhaust passage.

5. The method according to Claim 2, the hydrogen generator further comprising an air supplier and a controller, the method comprising:
supplying combustion air to the combustor through the air supplier; and
wherein, the controller causes the air supplier to operate when the pressure releasing device is exhausting the gas.

6. The method according to Claim 1, the hydrogen generator further comprising a combustor, an air supplier and a controller, the method further comprising:
heating the reformer using the combustor;
supplying combustion air to the combustor through the air supplier; and
wherein the exhaust passage is connected to the combustor; and
wherein, the controller causes the air supplier to operate when the pressure releasing device is exhausting the gas.

7. A method of operating a fuel cell system, the fuel cell system comprising a hydrogen generator and a fuel cell, the method comprising:
the method according to Claim 1 whereby the device outside the hydrogen generator is a fuel cell; and
using the fuel cell for generating electric power using the hydrogen-containing gas supplied from the hydrogen generator.

8. The method according to Claim 7, the fuel cell system further comprising a remaining fuel gas passage, the method comprising:
flowing a remaining fuel gas exhausted from the fuel cell through the remaining fuel gas passage;
wherein the cooler is a second cooler for cooling the remaining fuel gas flowing through the remaining fuel gas passage and the gas flowing through the exhaust passage.

9. The method according to Claim 8,
wherein the exhaust passage is connected to the remaining fuel gas passage; and
the second cooler is provided at the remaining fuel gas passage in a location downstream of a location where the exhaust passage is connected to the remaining fuel gas passage.

10. The method according to Claim 8, wherein the second cooler is provided so as to bridge the remaining fuel gas passage and the exhaust passage.

11. The method according to Claim 8, further comprising the method according to claim 6.

12. The method according to Claim 7 or 8, the fuel cell system further comprising an oxidizing gas supplier, and a remaining oxidizing gas passage, the method comprising:
supplying an oxidizing gas to the fuel cell through the oxidizing gas supplier; and
flowing a remaining oxidizing gas exhausted from the fuel cell through the remaining oxidizing gas passage;
wherein the cooler is a third cooler for cooling the remaining oxidizing gas flowing through the remaining oxidizing gas passage and the gas flowing through the exhaust passage.

13. The method according to Claim 12,
wherein the exhaust passage is connected to the remaining oxidizing gas passage; and
the third cooler is provided at the remaining oxidizing gas passage in a location downstream of a location where the exhaust passage is connected to the remaining oxidizing gas passage.

14. The method according to Claim 12, wherein the third cooler is provided so as to bridge the remaining oxidizing gas passage and the exhaust passage.

15. The method according to Claim 12, the fuel cell system further comprising a controller whereby the controller causes the oxidizing gas supplier to operate when the pressure releasing device is exhausting the gas.

## Patentansprüche

1. Verfahren zum Betrieb eines Wasserstoffgenerators, wobei der Wasserstoffgenerator den Reformer, einen Wasserverdampfer, einen Rohmaterialzufuhrkanal, einen Dampfzufuhrkanal, eine Druckentlastungsvorrichtung, einen Druckentlastungsabgaskanal und einen Kühler umfasst, wobei das Verfahren umfasst:
Zuführen von Rohmaterial zu einem Reformierungskatalysator des Reformers durch den Rohmaterialzufuhrkanal;
Erzeugen von Dampf mit dem Wasserverdampfer;
Zuführen des im Wasserverdampfer erzeugten Dampfes zum Reformierungskatalysator des Reformers durch den Dampfzufuhrkanal;
Dampfreformierung des Rohmaterials und des Dampfes im Reformer zur Erzeugung eines wasserstoffhaltigen Gases;
Lösen eines Drucks durch Betreiben der Druckentlastungsvorrichtung, die am Rohmaterialzufuhrkanal oder am Dampfzufuhrkanal bereitgestellt wird, und Strömen eines von der Druckentlastungsvorrichtung abgegebenen und den Dampf enthaltenden Gases durch den Druckentlastungsabgaskanal; und
Kühlen des von der Druckentlastungsvorrichtung abgegebenen und durch den Druckentlastungsabgaskanal strömenden Gases mit dem am Druckentlastungsabgaskanal bereitgestellten Kühler,
wobei die Druckentlastungsvorrichtung eine Ein-/Aus-Vorrichtung zum Durchführen eines Druckentlastungsvorgangs aufweist, um vorzugsweise das Materialgas und den Dampf abzugeben, die stromaufwärts des Reformierungskatalysators des Reformers vorhanden sind, und
wobei während der Erzeugung des wasserstoffhaltigen Gases im Reformer die Druckentlastungsvorrichtung den Druckentlastungsvorgang durchführt, wenn der Druck im Rohmaterialzufuhrkanal oder im Dampfzufuhrkanal, der mit der Druckentlastungsvorrichtung bereitgestellt wird, einen vorgegebenen Druck oder mehr erreicht und ein Druck in dem Reformer, dem Abgaskanal für erzeugtes Gas oder einer Vorrichtung außerhalb des Wasserstoffgenerators ansteigt, der mit einer stromabwärts gelegenen Seite des Abgaskanals für erzeugtes Gas verbunden ist.

2. Verfahren nach Anspruch 1, wobei der Wasserstoffgenerator des Weiteren eine Brennkammer und einen Verbrennungsabgaskanal umfasst, wobei das Verfahren des Weiteren umfasst:
Erwärmen des Reformers mittels der Brennkammer und
Strömen eines aus der Brennkammer abgegebenen Verbrennungsabgases durch den Verbrennungsabgaskanal;
wobei der Kühler ein erster Kühler zum Kühlen des durch den Verbrennungsabgaskanal strömenden Verbrennungsabgases und des durch den Abgaskanal strömenden Gases ist.

3. Verfahren nach Anspruch 2,
wobei der Verbrennungsabgaskanal mit dem Abgaskanal verbunden ist und
der erste Kühler am Abgaskanal in einer Stelle stromabwärts von einer Stelle bereitgestellt wird, an der der Verbrennungsabgaskanal mit dem Abgaskanal verbunden ist.

4. Verfahren nach Anspruch 2, wobei der erste Kühler so bereitgestellt wird, dass er den Verbrennungsabgaskanal und den Abgaskanal überbrückt.

5. Verfahren nach Anspruch 2, wobei der Wasserstoffgenerator des Weiteren eine Luftzufuhr und eine Steuerung umfasst, wobei das Verfahren umfasst:
Zuführen von Verbrennungsluft zur Brennkammer durch die Luftzufuhr und
wobei die Steuerung die Luftzufuhr arbeiten lässt, wenn die Druckentlastungsvorrichtung das Gas abgibt.

6. Verfahren nach Anspruch 1, wobei der Wasserstoffgenerator des Weiteren eine Brennkammer, eine Luftzufuhr und eine Steuerung umfasst, wobei das Verfahren des Weiteren umfasst:
Erwärmen des Reformers mittels der Brennkammer;
Zuführen von Verbrennungsluft zur Brennkammer durch die Luftzufuhr und
wobei der Abgaskanal mit der Brennkammer verbunden ist und
wobei die Steuerung die Luftzufuhr arbeiten lässt, wenn die Druckentlastungsvorrichtung das Gas abgibt.

7. Verfahren zum Betrieb eines Brennstoffzellensystems, wobei das Brennstoffzellensystem einen Wasserstoffgenerator und eine Brennstoffzelle umfasst, wobei das Verfahren umfasst:
das Verfahren nach Anspruch 1, wobei die Vorrichtung außerhalb des Wasserstoffgenerators eine Brennstoffzelle ist; und
Verwenden der Brennstoffzelle zum Erzeugen von elektrischer Energie mittels des aus dem Wasserstoffgenerator zugeführten wasserstoffhaltigen Gases.

8. Verfahren nach Anspruch 7, wobei das Brennstoffzellensystem des Weiteren einen Restbrenngaskanal umfasst, wobei das Verfahren umfasst:
Strömen eines von der Brennstoffzelle abgegebenen Restbrenngases durch den Restbrenngaskanal;
wobei der Kühler ein zweiter Kühler zum Kühlen des durch den Restbrenngaskanal strömenden Restbrenngases und des durch den Abgaskanal strömenden Gases ist.

9. Verfahren nach Anspruch 8,
wobei der Abgaskanal mit dem Restbrenngaskanal verbunden ist und
der zweite Kühler am Restbrenngaskanal in einer Stelle stromabwärts von einer Stelle bereitgestellt wird, an der der Abgaskanal mit dem Restbrenngaskanal verbunden ist.

10. Verfahren nach Anspruch 8, wobei der zweite Kühler so bereitgestellt wird, dass er den Restbrenngaskanal und den Abgaskanal überbrückt.

11. Verfahren nach Anspruch 8, das des Weiteren das Verfahren nach Anspruch 6 umfasst.

12. Verfahren nach Anspruch 7 oder 8, wobei das Brennstoffzellensystem des Weiteren eine Oxidationsgaszufuhr und einen Restoxidationsgaskanal umfasst, wobei das Verfahren umfasst:
Zuführen eines Oxidationsgases zu der Brennstoffzelle durch die Oxidationsgaszufuhr und
Strömen eines von der Brennstoffzelle abgegebenen Restoxidationsgases durch den Restoxidationsgaskanal;
wobei der Kühler ein dritter Kühler zum Kühlen des durch den Restoxidationsgaskanal strömenden Restoxidationsgases und des durch den Abgaskanal strömenden Gases ist.

13. Verfahren nach Anspruch 12,
wobei der Abgaskanal mit dem Restoxidationsgaskanal verbunden ist und
der dritte Kühler an dem Restoxidationsgaskanal in einer Stelle stromabwärts von einer Stelle bereitgestellt wird, an der der Abgaskanal mit dem Restoxidationsgaskanal verbunden ist.

14. Verfahren nach Anspruch 12, wobei der dritte Kühler so bereitgestellt wird, dass erden Restoxidationsgaskanal und den Abgaskanal überbrückt.

15. Verfahren nach Anspruch 12, wobei das Brennstoffzellensystem des Weiteren eine Steuerung umfasst, wodurch die Steuerung die Oxidationsgaszufuhr arbeiten lässt, wenn die Druckentlastungsvorrichtung das Gas abgibt.

## Revendications

1. Procédé de fonctionnement d'un dispositif de production d'hydrogène, le dispositif de production d'hydrogène comprenant le module de reformage, un évaporateur d'eau, un passage de fourniture de matière première, un passage de fourniture de vapeur, un dispositif de relâchement de pression, un passage d'échappement de relâchement de pression et un refroidisseur, le procédé comprenant :
la fourniture de matière première à un catalyseur de reformage du module de reformage à travers le passage de fourniture de matière première ;
la production de vapeur avec l'évaporateur d'eau ;
la fourniture de la vapeur produite dans l'évaporateur d'eau au catalyseur de reformage du module de reformage à travers le passage de fourniture de vapeur;
le reformage à la vapeur de la matière première et de la vapeur dans le module de reformage pour produire un gaz contenant de l'hydrogène ;
un relâchement de pression en actionnant le dispositif de relâchement de pression, situé au niveau du passage de fourniture de matière première ou du passage de fourniture de vapeur et en faisant circuler un gaz libéré par le dispositif de relâchement de pression et contenant la vapeur à travers le passage d'échappement de relâchement de pression ; et
le refroidissement du gaz libéré par le dispositif de relâchement de pression et circulant à travers le passage d'échappement de relâchement de pression au moyen du refroidisseur situé au niveau du passage d'échappement de relâchement de pression,
où le dispositif de relâchement de pression inclut un dispositif tout ou rien destiné à effectuer une opération de relâchement de pression pour libérer préférentiellement le gaz matière première et la vapeur qui sont présents en amont du catalyseur de reformage du module de reformage, et
où, pendant la production du gaz contenant de l'hydrogène dans le module de reformage, le dispositif de relâchement de pression exécute l'opération de relâchement de pression, quand la pression dans le passage de fourniture de matière première ou le passage de fourniture de vapeur, qui est équipé du dispositif de relâchement de pression, atteint ou dépasse une pression prédéfinie et une pression augmente dans le module de reformage, le passage d'échappement du gaz produit ou un dispositif extérieur au dispositif de production d'hydrogène qui est relié à un côté amont du passage d'échappement du gaz produit.

2. Procédé selon la revendication 1, le dispositif de production d'hydrogène comprenant en outre un module de combustion et un passage de gaz d'échappement de combustion, le procédé comprenant en outre :
le chauffage du module de reformage à l'aide du module de combustion ; et
la circulation d'un gaz d'échappement de combustion libéré par le module de combustion à travers le passage de gaz d'échappement de combustion ;
dans lequel le refroidisseur est un premier refroidisseur destiné à refroidir le gaz d'échappement de combustion circulant à travers le passage de gaz d'échappement de combustion et le gaz circulant à travers le passage d'échappement.

3. Procédé selon la revendication 2,
dans lequel le passage de gaz d'échappement de combustion est relié au passage d'échappement ; et
le premier refroidisseur est situé au niveau du passage d'échappement à un emplacement en aval d'un emplacement où le passage de gaz d'échappement de combustion est relié au passage d'échappement.

4. Procédé selon la revendication 2, dans lequel le premier refroidisseur est situé de façon à servir de liaison entre le passage de gaz d'échappement de combustion et le passage d'échappement.

5. Procédé selon la revendication 2, le dispositif de production d'hydrogène comprenant en outre un dispositif de fourniture d'air et un module de commande, le procédé comprenant :
la fourniture d'air de combustion au module de combustion par le biais du dispositif de fourniture d'air ; et
dans lequel le module de commande amène le dispositif de fourniture d'air à fonctionner lorsque le dispositif de relâchement de pression est en train de libérer du gaz.

6. Procédé selon la revendication 1, le dispositif de production d'hydrogène comprenant en outre un module de combustion, un dispositif de fourniture d'air et un module de commande, le procédé comprenant en outre :
le chauffage du module de reformage en utilisant le module de combustion ;
la fourniture d'air de combustion au module de combustion à travers le dispositif de fourniture d'air ; et
dans lequel le passage d'échappement est relié au module de combustion ; et
dans lequel le module de commande amène le dispositif de fourniture d'air à fonctionner lorsque le dispositif de relâchement de pression est en train de libérer le gaz.

7. Procédé de fonctionnement d'un système de pile à combustible, le système de pile à combustible comprenant un dispositif de production d'hydrogène et une pile à combustible, le procédé comprenant :
le procédé selon la revendication 1, où le dispositif à l'extérieur du dispositif de production d'hydrogène est une pile à combustible ; et
l'utilisation de la pile à combustible pour produire de l'énergie électrique en utilisant le gaz contenant de l'hydrogène fourni par le dispositif de production d'hydrogène.

8. Procédé selon la revendication 7, le système de pile à combustible comprenant en outre un passage de gaz combustible résiduel, le procédé comprenant :
la circulation d'un gaz combustible résiduel libéré par la pile à combustible à travers le passage de gaz combustible résiduel ;
dans lequel le refroidisseur est un deuxième refroidisseur destiné à refroidir le gaz combustible résiduel circulant à travers le passage de gaz combustible résiduel et le gaz circulant à travers le passage d'échappement.

9. Procédé selon la revendication 8,
dans lequel le passage d'échappement est relié au passage de gaz combustible résiduel ; et
le deuxième refroidisseur est situé au niveau du passage de gaz combustible résiduel à un emplacement en aval d'un emplacement où le passage d'échappement est relié au passage de gaz combustible résiduel.

10. Procédé selon la revendication 8, dans lequel le deuxième refroidisseur est situé de façon à servir de liaison entre le passage de gaz combustible résiduel et le passage d'échappement.

11. Procédé selon la revendication 8, comprenant en outre le procédé selon la revendication 6.

12. Procédé selon la revendication 7 ou 8, le système de pile à combustible comprenant en outre un dispositif de fourniture de gaz comburant et un passage de gaz comburant résiduel, le procédé comprenant :
la fourniture d'un gaz comburant à la pile à combustible par le biais du dispositif de fourniture de gaz comburant ; et
la circulation d'un gaz comburant résiduel libéré par la pile à combustible à travers le passage de gaz comburant résiduel ;
dans lequel le refroidisseur est un troisième refroidisseur destiné à refroidir le gaz comburant résiduel circulant à travers le passage de gaz comburant résiduel et le gaz circulant à travers le passage d'échappement.

13. Procédé selon la revendication 12,
dans lequel le passage d'échappement est relié au passage de gaz comburant résiduel ; et
le troisième refroidisseur est situé au niveau du passage de gaz comburant résiduel à un emplacement en aval d'un emplacement où le passage d'échappement est relié au passage de gaz comburant résiduel.

14. Procédé selon la revendication 12, dans lequel le troisième refroidisseur est situé de façon à servir de liaison entre le passage de gaz comburant résiduel et le passage d'échappement.

15. Procédé selon la revendication 12, le système de pile à combustible comprenant en outre un module de commande, où le module de commande amène le dispositif de fourniture de gaz comburant à fonctionner quand le dispositif de relâchement de pression est en train de libérer le gaz.
